(19) **Europäisches Patentamt**
**European Patent Office**
**Office européen des brevets**

(11) **EP 4 692 258 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
*C09D 17/00* (2006.01)    *B05D 1/36* (2006.01)
*B05D 5/06* (2006.01)    *B05D 7/24* (2006.01)
*C09C 1/40* (2006.01)    *C09C 3/10* (2006.01)
*C09D 7/62* (2018.01)    *C09D 201/00* (2006.01)

(21) Application number: **24780775.3**

(52) Cooperative Patent Classification (CPC):
**B05D 1/36; B05D 5/06; B05D 7/24; C09C 1/40;**
**C09C 3/10; C09D 7/62; C09D 17/00; C09D 201/00**

(22) Date of filing: **29.03.2024**

(86) International application number:
**PCT/JP2024/012976**

(87) International publication number:
**WO 2024/204680 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 JP 2023056819**

(71) Applicant: **Kansai Paint Co., Ltd.**
**Amagasaki-shi, Hyogo 661-8555 (JP)**

(72) Inventors:
• **KUBO, Kentaro**
**Miyoshi-shi, Aichi 470-0206 (JP)**
• **INOUE, Koki**
**Miyoshi-shi, Aichi 470-0206 (JP)**
• **OMURA, Masahiro**
**Miyoshi-shi, Aichi 470-0206 (JP)**

(74) Representative: **Müller-Boré & Partner**
**Patentanwälte PartG mbB**
**Friedenheimer Brücke 21**
**80639 München (DE)**

(54) **BRIGHT PIGMENT DISPERSION AND METHOD FOR FORMING MULTILAYER COATING FILM**

(57)    The present invention provides an effect pigment dispersion containing a wetting agent (A), an effect pigment (B), nanocellulose (C), and water (D), wherein the effect pigment dispersion has a solids content of 0.1 to 10 parts by mass per 100 parts by mass of all of the components of the effect pigment dispersion, and the nanocellulose (C) contains phosphate group-containing nanocellulose (C1) and at least one member selected from the group consisting of carboxy-containing nanocellulose (C2) and sulfonic acid group-containing nanocellulose (C3).

EP 4 692 258 A1

## Description

Technical Field

The present invention relates to an effect pigment dispersion and a method for forming a multilayer coating film.

Background Art

The main purpose of applying paint is to protect materials and to impart an excellent appearance to materials. In industrial products, great value is placed on excellent appearance, in particular texture, to enhance product appeal. Although the texture required for industrial products by consumers varies, metallic or pearlescent luster has been in demand in fields such as automobile exterior panels and automobile parts in recent years (metallic luster and pearlescent luster are collectively referred to below as "metallic or pearly luster").

"Metallic or pearly luster" refers to a texture characterized in that a surface has no graininess, like a mirror surface, and that when viewed near the specular reflection (highlight), the coated plate shines brightly, whereas when viewed in an area with relatively low reflection intensity away from the specular reflection (bottom), the coated plate looks dark, that is, characterized by a large difference in brightness between the highlighted area and the bottom area.

Techniques to impart such metallic or pearly luster to the surface of an industrial product include metal plating and metal deposition (e.g., Patent Literature (PTL 1). However, if paint can impart metallic or pearly luster, it is advantageous, for example, in terms of simplicity and costs. If the paint is an aqueous paint, it is more advantageous from the viewpoint of environmental impact.

Patent Literature (PTL) 2 discloses an aqueous base paint composition containing an effect pigment composed of metal flakes obtained by crushing a vapor deposition metal film, and an aqueous cellulose derivative having an acid value of 20 to 150 mgKOH/g (solids content), wherein the aqueous cellulose derivative serves as a main binder resin, and the effect pigment content is 20 to 70 mass% in terms of PWC.

However, the coating film formed of the paint disclosed in PTL 2 is unsatisfactory in terms of metallic or pearly luster.

On the other hand, Patent Literature (PTL) 3) discloses an effect pigment dispersion that contains water, a flaky aluminum pigment, and a cellulose-based rheology control agent, wherein the effect pigment dispersion contains 0.1 to 10 parts by mass of solids per 100 parts by mass of all of the components of the effect pigment dispersion, the viscosity as measured with a Brookfield viscometer is 400 to 10000 mPa·sec at a rotational speed of 6 revolutions per minute, and the solids content of the flaky aluminum pigment is 30 to 200 parts by mass per 100 parts by mass of the total amount of components except for the flaky aluminum pigment in the total solids content.

The coating film formed of the effect pigment dispersion disclosed in PTL 3 has excellent metallic luster, but wrinkles may occur in edge portions, where the film thickness tends to be greater than in general portions, and sagging may occur in vertical portions.

Citation List

Patent Literature

PTL 1: JPS63-272544A
PTL 2: JP2009-155537A
PTL 3: WO2017/175468

Summary of Invention

Technical Problem

An object of the present invention is to provide an effect pigment dispersion that is capable of forming a coating film with excellent metallic luster, pearly metallic luster, or pearly luster that does not wrinkle in edge portions, where the film thickness tends to be greater than in general portions, and that is free of sagging in vertical portions.

Solution to Problem

The present invention includes the subject matter described in the following Items.

Item 1. An effect pigment dispersion comprising

a wetting agent (A),
an effect pigment (B),
nanocellulose (C), and
water (D),

wherein

the effect pigment dispersion has a solids content of 0.1 to 10 parts by mass per 100 parts by mass of all of the components of the effect pigment dispersion, and
the nanocellulose (C) contains phosphate group-containing nanocellulose (C1) and at least one member selected from the group consisting of carboxy-containing nanocellulose (C2) and sulfonic acid group-containing nanocellulose (C3).

Item 2. The effect pigment dispersion according to Item 1, wherein the effect pigment (B) comprises an aluminum pigment.

Item 3. The effect pigment dispersion according to Item 1 or 2, wherein the phosphate group-containing nanocellulose (C1) comprises phosphate group-containing cellulose nanofiber (C11) and/or phosphate group-containing cellulose nanocrystal (C12).

Item 4. The effect pigment dispersion according to any one of Items 1 to 3, wherein the cellulose (C) comprises the carboxy-containing nanocellulose (C2), the carboxy-containing nanocellulose (C2) comprising carboxy-containing cellulose nanofiber (C21) and/or carboxy-containing cellulose nanocrystal (C22).

Item 5. The effect pigment dispersion according to any one of Items 1 to 4, wherein the cellulose (C) comprises the sulfonic acid group-containing nanocellulose (C3), the sulfonic acid group-containing nanocellulose (C3) comprising sulfononic acid group-containing cellulose nanofiber (C31) and/or sulfonic acid group-containing cellulose nanocrystal (C32).

Item 6. The effect pigment dispersion according to any one of Items 1 to 5, wherein the content ratio of the phosphate group-containing nanocellulose (C1) to the at least one member selected from the group consisting of carboxy-containing nanocellulose (C2) and sulfonic acid group-containing nanocellulose (C3) is in the range of 1/99 to 50/50 in terms of mass ratio.

Item 7. A method for forming a multilayer coating film, comprising the following steps:

step (1): applying a base paint (X) to a substrate to form an uncured base coating film;
step (2): applying the effect pigment dispersion (Y) of any one of Items 1 to 6 to the base coating film formed in step (1) to form an uncured effect coating film;
step (3): applying a clear paint (Z) to the effect coating film formed in step (2) to form an uncured clear coating film; and
step (4): simultaneously heating the uncured base coating film formed in step (1), the uncured effect coating film formed in step (2), and the uncured clear coating film formed in step (3) to cure the films.

Advantageous Effects of Invention

The present invention can provide an effect pigment dispersion that is capable of forming a coating film with excellent metallic luster or pearly luster, that does not wrinkle in edge portions, where the film thickness tends to be greater than in general portions, and that is free of sagging in vertical portions.

Description of Embodiments

The singular forms (the terms "a," "an," and "the") used in the present specification shall be construed to include both the singular and the plural unless otherwise indicated in the specification or clearly contradicted by context.

The term "comprise" used herein includes the concepts of consisting essentially of and consisting of.

In the numerical range described in stages in the present specification, the upper or lower limit of the numerical range at one stage can be optionally combined with the upper or lower limit of the numerical range at another stage. In the numerical range described in the present specification, the upper or lower limit of the numerical range may be replaced with a value shown in the Examples, or a value that can be uniquely derived from the Examples. Further, in the present specification, numerical values connected by the term "to" mean the numerical range including the numerical values before and after the term "to" as the lower-limit value and the upper-limit value.

In the present specification, the term "edge portions" refers to end portions of the substrate. Examples of edge portions include fringe portions of the substrate and corner portions formed by intersection of two faces of the substrate.

In the present specification, the term "vertical portions" refers to portions that extend in a substantially vertical direction when the substrate is disposed at a fixed position.

The term "general portions" refers to the part that occupies the majority of the area of the substrate or a member of the substrate that does not come into contact with other members, such as the main body portion, excluding edge portions.

The effect pigment dispersion of the present invention is an effect pigment dispersion containing a wetting agent (A), an effect pigment (B), nanocellulose (C), and water (D), wherein

the effect pigment dispersion has a solids content of 0.1 to 10 parts by mass per 100 parts by mass of all of the components of the effect pigment dispersion, and
the nanocellulose (C) contains phosphate group-containing nanocellulose (C1) and at least one member selected from the group consisting of carboxy-containing nanocellulose (C2) and sulfonic acid group-containing nanocellulose (C3).

Wetting Agent (A)

The wetting agent (A) in the effect pigment dispersion of the present invention can be any material that aids in uniformly orientating the effect pigment dispersion on a substrate when the effect pigment dispersion is applied to the substrate.

Materials that have such an effect are also referred to as a "wetter," "leveling agent," "surface-adjusting agent," "antifoaming agent," "surfactant," "super-wetter," or the like, as well as a "wetting agent." The wetting agent includes a wetter, a leveling agent, a surface-adjusting agent, an antifoaming agent, a surfactant, and a super-wetter.

Examples of the wetting agent (A) include silicone-based wetting agents, acrylic wetting agents, vinyl-based wetting agents, fluorine-based wetting agents, and acetylene diol-based wetting agents. Such wetting agents can be used alone or in an appropriate combination of two or more.

Using an acetylene diol-based wetting agent and/or a wetting agent having an ethylene oxide chain as the wetting agent (A) is preferably used from the standpoint of obtaining an effect pigment dispersion and a multilayer film formation method that are capable of forming a coating film with excellent water resistance and metallic or pearly luster as well as high stability.

In particular, the wetting agent (A) is preferably an ethylene oxide adduct of acetylene diol.

Examples of commercial products of the wetting agent (A) include the Dynol series, Surfynol series, and Tego series (all produced by Evonik), BYK series (produced by BYK-Chemie), Glanol series and Polyflow series (both produced by Kyoeisha Chemical Co., Ltd.), and Disparlon series (produced by Kusumoto Chemicals, Ltd.)

The content of the wetting agent (A) in the effect pigment dispersion of the present invention is preferably 1.5 to 30 parts by mass, more preferably 2 to 25 parts by mass, and even more preferably 2.5 to 20 parts by mass, on a solids basis, per 100 parts by mass of the solids of the effect pigment dispersion, from the standpoint of forming a coating film that has excellent metallic luster, pearly metallic luster, or pearly luster, that does not wrinkle in edge portions, where the film thickness tends to be greater than in general portions, and that is free of sagging in vertical portions.

Effect Pigment (B)

Examples of the effect pigment (B) in the effect pigment dispersion of the present invention include vapor-deposition metal flake pigments, aluminum flake pigments, and interference pigments. One or a combination of two or more of these pigments can be suitably selected for use, depending on the texture required for the coating film to be obtained. From the standpoint of obtaining a coating film with excellent metallic luster, vapor-deposition metal flake pigments and aluminum flake pigments are preferable. From the standpoint of obtaining a coating film with excellent pearly luster, interference pigments are preferable.

Vapor-deposition metal flake pigments are obtained by vapor-depositing a metal film on a base material, peeling the base material, and then grinding the vapor-deposition metal film. Examples of the base material include films.

Examples of the material of the metal film include aluminum, gold, silver, copper, brass, titanium, chromium, nickel, nickel chromium, and stainless steel. Of these, aluminum or chromium is particularly preferable from the standpoints of, for example, availability and ease of handling. In the present specification, a vapor-deposition metal flake pigment obtained by vapor-depositing aluminum is referred to as a "vapor-deposition aluminum flake pigment," and a vapor-deposition metal flake pigment obtained by vapor-depositing chromium is referred to as a "vapor-deposition chromium flake pigment."

The vapor-deposition aluminum flake pigment is preferably surface-treated with silica from the standpoint of, for example, obtaining a coating film with excellent storage stability and metallic luster.

Examples of commercial products that can be used as the vapor-deposition aluminum flake pigment include the Metalure series (trade name, produced by Eckart), Hydroshine WS series (trade name, produced by Eckart), Decomet series (trade name, produced by Schlenk), and Metasheen series (trade name, produced by BASF).

Examples of commercial products that can be used as the vapor-deposition chromium flake pigment include the Metalure Liquid Black series (trade name, produced by Eckart).

The vapor-deposition metal flake pigment preferably has an average thickness of 0.01 to 1.0 $\mu$m, and more preferably 0.015 to 0.1 $\mu$m.

The vapor-deposition metal flake pigment preferably has an average particle size (D50) of 1 to 50 $\mu$m, and more preferably 5 to 20 $\mu$m.

The "average particle size" as referred to herein means the median diameter in a volume-based particle size distribution as measured by a laser diffraction scattering method using a MT3300 Microtrac particle size distribution analyzer (trade name, produced by Nikkiso Co., Ltd.). The thickness is defined as the average value obtained by observing the cross-section of a coating film containing the effect pigment under a microscope, measuring the thickness using image processing software, and calculating the average of the measured values of 100 or more particles.

When the average particle size is equal to or less than the upper limit, no graininess is formed in the multi-layer coating film. When the average particle size is equal to or more than the lower limit, a large change in lightness from highlight to bottom is maintained.

Aluminum flake pigments are generally produced by crushing and grinding aluminum using a grinding aid in a ball mill or an attritor mill in the presence of a grinding liquid medium. Grinding aids for use in the production step of the aluminum flake pigment include higher fatty acids, such as oleic acid, stearic acid, isostearic acid, lauric acid, palmitic acid, and myristic acid, as well as aliphatic amines, aliphatic amides, and aliphatic alcohols. Grinding liquid media for use include aliphatic hydrocarbons, such as mineral spirits.

Aluminum flake pigments are broadly categorized into leafing aluminum flake pigments and non-leafing aluminum flake pigments according to the type of grinding aid. A non-leafing aluminum pigment is preferably used in the effect pigment dispersion of the present invention from the standpoint of forming a dense metallic coating film that exhibits excellent water resistance, high gloss in highlight, and low graininess. The non-leafing aluminum pigment for use may be, for example, those whose surface is not particularly treated, those whose surface is coated with a resin, those whose surface is treated with silica, or those whose surface is treated with phosphoric acid, molybdic acid, or a silane coupling agent. The non-leafing aluminum pigment for use may be a non-leafing aluminum pigment that has been subjected to one or several of these surface treatments.

The aluminum flake pigment for use may be a colored aluminum pigment prepared by coating the surface of an aluminum flake pigment with a color pigment, and further coating the coated surface with a resin, or a colored aluminum pigment prepared by coating the surface of an aluminum flake pigment with a metal oxide, such as iron oxide.

From the standpoint of forming a dense metallic coating film that exhibits high gloss in highlight and low graininess, the aluminum flake pigment for use preferably has an average particle size of 1 to 100 $\mu$m, more preferably 5 to 50 $\mu$m, and particularly preferably 7 to 30 $\mu$m. The aluminum flake pigment for use preferably has a thickness of 0.01 to 1.0 $\mu$m, and particularly preferably 0.02 to 0.5 $\mu$m.

As the effect pigment (B) in the effect pigment dispersion, the vapor-deposition metal flake pigment and the aluminum flake pigment can also be used in combination. In this case, the mixing ratio of the vapor deposition metal flake pigment to the aluminum flake pigment is a mass ratio of 9/1 to 1/9, and preferably 2/8 to 8/2.

The interference pigment for use is preferably an interference pigment obtained by coating a transparent or translucent base material with titanium oxide. In the present specification, the "transparent base material" refers to a base material that transmits at least 90% of visible light. In the present specification, the "translucent base material" refers to a base material that transmits at least 10% and less than 90% of visible light.

"Interference pigments" refer to effect pigments prepared by coating the surface of a transparent or translucent flaky base material, such as mica, synthetic mica, glass, iron oxide, aluminum oxide, and various metal oxides, with a metal oxide that has a refractive index different from that of the base material. Examples of metal oxides include titanium oxide and iron oxide. Interference pigments can develop a variety of different interference colors, depending on the difference in the thickness of the metal oxide.

Specifically, examples of interference pigments include the following metal oxide-coated mica pigments, metal oxide-coated alumina flake pigments, metal oxide-coated glass flake pigments, and metal oxide-coated silica flake pigments.

Metal oxide-coated mica pigments are pigments containing natural mica or synthetic mica as a base material and obtained by coating the surface of the base material with a metal oxide. Natural mica is a flaky base material obtained by pulverizing mica from ore. Synthetic mica is synthesized by heating an industrial material, such as $SiO_2$, MgO, $Al_2O_3$, $K_2SiF_6$, or $Na_2SiF_6$, to melt the material at a high temperature of about 1500°C, and cooling the melt for crystallization.

When compared with natural mica, synthetic mica contains a smaller amount of impurities and has a more uniform size and thickness. Specific examples of synthetic mica base materials include fluorophlogopite ($KMg_3AlSi_3O_{10}F_2$), potassium tetrasilicon mica ($KMg_{2.5}AlSi_4O_{10}F_2$), sodium tetrasilicon mica ($NaMg_{2.5}AlSi_4O_{10}F_2$), Na taeniolite ($NaMg_2LiSi_4O_{10}F_2$), and LiNa taeniolite ($LiMg_2LiSi_4O_{10}F_2$).

Metal oxide-coated alumina flake pigments are pigments containing alumina flakes as a base material and obtained by coating the surface of the base material with metal oxide. "Alumina flakes" refer to flaky (thin) aluminum oxides, which are clear and colorless. Alumina flakes do not necessarily consist of only aluminum oxide, and may contain other metal oxides.

Metal oxide-coated glass flake pigments are pigments containing flaky glass as a base material and obtained by coating the surface of the base material with metal oxide. The metal oxide-coated glass flake pigments have a smooth base material surface, which causes intense light reflection.

Metal oxide-coated silica flake pigments are pigments obtained by coating flaky silica, which is a base material having a smooth surface and a uniform thickness, with metal oxide.

The interference pigment for use may be subjected to surface treatment in order to improve dispersibility, water resistance, chemical resistance, weather resistance, or the like.

The interference pigment for use preferably has an average particle size of 5 to 30 $\mu$m, and particularly preferably 7 to 20 $\mu$m, from the standpoint of obtaining a coating film with excellent pearly luster.

The "particle size" as referred to herein means the median size in volume-based particle size distribution as measured by laser diffraction scattering with an MT3300 Microtrac particle size distribution analyzer (trade name, produced by Nikkiso Co., Ltd.).

The interference pigment preferably has a thickness of 0.05 to 1.0 $\mu$m, and particularly preferably 0.1 to 0.8 $\mu$m, from the standpoint of obtaining a coating film with excellent pearly luster.

The flake-effect pigment (B) in the effect pigment dispersion preferably has an average particle size in the range of 1 to 100 $\mu$m, more preferably 5 to 50 $\mu$m, and particularly preferably 7 to 30 $\mu$m, from the standpoint of forming a dense coating film with metallic or pearly luster that exhibits excellent high gloss in highlight and low graininess. The aluminum flake pigment for use preferably has a thickness in the range of 0.01 to 1.0 $\mu$m, and particularly preferably in the range of 0.02 to 0.5 $\mu$m.

From the viewpoint of forming a coating film that has excellent metallic or pearly metallic or pearly luster and that does not wrinkle in edge portions, where the film thickness tends to be greater than in general portions, and that is free of sagging in vertical portions, the content of the effect pigment (B) in the effect pigment dispersion of the present invention is preferably 5 to 80 parts by mass, more preferably 10 to 75 parts by mass, and even more preferably 15 to 70 parts by mass, based on 100 parts by mass of the solids of the effect pigment dispersion.

Nanocellulose (C)

Nanocellulose (C) comprises at least one selected from the group consisting of phosphate group-containing nanocellulose (C1), carboxy-containing nanocellulose (C2), and sulfonic acid group-containing nanocellulose (C3).

"Nanocellulose" refers to nanostructured cellulose, which is the main component of plant cell walls, that has been disentangled and finely broken down to a nanoscale level. Specific examples include cellulose nanofibers, cellulose nanocrystals, cellulose nanowhiskers, and bacterial nanocellulose produced by bacteria.

In this specification, cellulose nanofiber is defined as a compound obtained by subjecting cellulose fibers to a treatment such as mechanical fibrillation. Cellulose nanocrystal is defined as a compound obtained by subjecting cellulose fibers to a chemical treatment such as acid hydrolysis.

The nanocellulose for use can be one obtained by fibrillating a cellulose raw material. Examples of the cellulose raw material include plant materials (e.g., wood, bamboo, hemp, jute, kenaf, agricultural waste, cloth, and pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), and recycled pulp, and waste paper), animal materials (e.g., Ascidiacea), algae, microorganisms (e.g., acetic acid bacteria (Acetobacter)), and those originating from microbial products. Any of these materials can be used. The cellulose raw material is preferably derived from plants or microorganisms, and is more preferably a cellulose raw material derived from a plant.

Phosphate Group-containing Nanocellulose (C1)

The phosphate group-containing nanocellulose (C1) preferably comprises phosphate group-containing cellulose nanofiber (C11) and/or phosphate group-containing cellulose nanocrystal (C12), and more preferably comprises phosphate group-containing cellulose nanofiber (C11), from the standpoint of forming a coating film that has excellent metallic or pearly metallic or pearly luster, that does not wrinkle in edge portions, where the film thickness tends to be greater than in general portions, and that is free of sagging in vertical portions.

The phosphate group-containing cellulose nanofiber (C11) preferably has a number average fiber diameter in the range of 2 to 500 nm, more preferably 2 to 250 nm, and even more preferably 2 to 150 nm, from the standpoint of forming a coating film that has excellent metallic or pearly metallic or pearly luster, that does not wrinkle in edge portions, where the film thickness tends to be greater than in general portions, and that is free of sagging in vertical portions. The phosphate group-containing cellulose nanofiber (C11) preferably has a number average fiber length in the range of 0.1 to 20 μm, more preferably 0.1 to 15 μm, and even more preferably 0.1 to 10 μm. The aspect ratio, which is determined by dividing the number average fiber length by the number average fiber diameter, is preferably within a range of 50 to 10000, more preferably 50 to 5000, and even more preferably 50 to 1000.

The number average fiber diameter and number average fiber length are measured and calculated, for example, from an image obtained by dispersing a sample prepared by diluting phosphate group-containing cellulose nanofiber (C11) with water, casting the sample on a grid coated with a carbon film that has been subjected to hydrophilic treatment, and observing the sample with a transmission electron microscope (TEM).

The method for producing phosphate group-containing cellulose nanofiber (C11) is not particularly limited and includes, for example, a method comprising the step of introducing phosphate groups into a cellulose raw material, and the step of fibrillation. In the phosphate group introduction step, a phosphate group-containing compound and/or a salt thereof is allowed to act on a cellulose raw material in the presence of urea and/or a derivative thereof. This introduces phosphate groups into hydroxy groups of the cellulose raw material. In the fibrillation step, the phosphate-group-introduced fiber material (which is referred to below as "phosphate group-introduced cellulose fibers") is fibrillated to a nano level. These treatment steps are performed in the order of the phosphate group introduction step, and then the fibrillation step. The phosphate group introduction step includes the step of introducing phosphate groups into cellulose, and may further include an alkali treatment step, a step of washing off extra reagents, and a heating step of cleaving condensed phosphate groups.

The phosphate group-containing compound and/or a salt thereof contains one or more phosphorus atoms and can form one or more ester bonds with cellulose. The compound that contains one or more phosphorus atoms and that can form one or more ester bonds with hydroxy groups of cellulose is, for example, although not particularly limited to, at least one member selected from the group consisting of phosphoric acid, a phosphate, a dehydration condensate of phosphoric acid, a salt of a dehydration condensate of phosphoric acid, diphosphorus pentoxide, and phosphorus oxychloride; or a mixture thereof. These compounds may contain water, for example, in the form of hydrated water or may contain substantially no water in the form of anhydride.

The phosphate or the salt of a dehydration condensate of phosphoric acid is, although not particularly limited to, a salt selected from a lithium salt, a sodium salt, a potassium salt, an ammonium salt, an organic ammonium salt, and an organic phosphonium salt of phosphoric acid or of a dehydration condensate of phosphoric acid, as well as a salt with any basic compound.

The degree of neutralization of the phosphate or the salt of a dehydration condensate of phosphoric acid can be any degree.

Of these, phosphoric acid, a sodium salt of phosphoric acid, a potassium salt of phosphoric acid, and an ammonium salt of phosphoric acid are preferable from the standpoint of high efficiency in introducing phosphate groups, the likeliness of increasing fibrillation efficiency in the fibrillation step described below, low costs, and ease of industrial application. Phosphoric acid, ammonium dihydrogen phosphate, and sodium dihydrogen phosphate are more preferable.

The urea and/or derivatives thereof include, but are not particularly limited to, urea, thiourea, biuret, phenylurea, benzylurea, dimethylurea, diethylurea, tetramethylurea, benzolein urea, and hydantoin. Of these, urea is preferable from the standpoint of low costs, ease of handling, and ease of forming hydrogen bonds with a hydroxy-containing fiber material.

The reaction system may contain an amide or an amine in addition to the compound. Examples of amides include formamide, dimethylformamide, acetamide, and dimethylacetamide. Examples of amines include methylamine, ethylamine, trimethylamine, triethylamine, monoethanolamine, diethanolamine, triethanolamine, pyridine, ethylenediamine, and hexamethylenediamine. Of these, in particular, triethylamine is known to act as an excellent reaction catalyst.

Although not limited, the amount of phosphate groups to be introduced into a cellulose raw material is preferably 0.10 to 3.65 mmol/g, more preferably 0.20 to 3.00 mmol/g, and still more preferably 0.50 to 2.00 mmol/g, per gram (mass) of fine cellulose fiber.

The content of the phosphate group-containing nanocellulose (C1) in the effect pigment dispersion of the present invention is preferably 0.1 to 10 parts by mass, more preferably 0.2 to 7.5 parts by mass, and even more preferably 0.3 to 5 parts by mass, based on 100 parts by mass of the solids of the effect pigment dispersion, from the standpoint of forming a coating film that has excellent metallic or pearly metallic or pearly luster, that does not wrinkle in edge portions, where the film thickness tends to be greater than in general portions, and that is free of sagging in vertical portions.

Carboxy-containing Nanocellulose (C2)

The carboxy-containing nanocellulose (C2) preferably contains carboxy-containing cellulose nanofiber (C21) and/or carboxy-containing cellulose nanocrystal (C22), and more preferably carboxy-containing cellulose nanofiber (C21), from the standpoint of forming a coating film that has excellent metallic or pearly metallic or pearly luster, that does not wrinkle in edge portions, where the film thickness tends to be greater than in general portions, and that is free of sagging in vertical portions.

The carboxy-containing cellulose nanofiber (C21) preferably has a carboxy content of 0.80 to 1.10 mmol/g, more preferably 0.85 to 1.10 mmol/g, and even more preferably 0.90 to 1.10 mmol/g, based on the absolute dry mass of the cellulose nanofiber.

Carboxy-containing cellulose nanofiber (C21) can be obtained by fibrillating oxidized cellulose fibers that have been produced by introducing carboxy groups into a cellulose raw material, by a known method. A method for introducing a carboxy group into a cellulose raw material includes, for example, a method comprising oxidizing the cellulose raw material in water using an oxidizing agent in the presence of an N-oxyl compound and a bromide, an iodide, or a mixture thereof. This oxidation reaction selectively oxidizes the primary hydroxy group at the C6 position of the pyranose ring on the cellulose surface. As a result, a carboxy group (-COOH) or a carboxylate group (-COO-) can be introduced into the surface.

The "N-oxyl compound" refers to a compound capable of generating a nitroxy radical. As the N-oxyl compound, any compound that promotes the desired oxidation reaction can be used. Examples of usable compounds include 2,2,6,6-tetramethylpiperidine-1-oxy radical (TEMPO) and derivatives thereof (e.g., 4-hydroxyTEMPO).

The amount of the N-oxyl compound is not particularly limited as long as it is a catalytic amount capable of oxidizing the raw-material cellulose. The amount is preferably 0.01 mmol to 10 mmol, more preferably 0.01 mmol to 1 mmol, and even more preferably 0.05 mmol to 0.5 mmol, relative to 1 g of absolute dry cellulose. The concentration of the N-oxyl compound in the reaction system is preferably about 0.1 mmol/L to about 4 mmol/L.

Bromide is a compound that contains bromine, and examples include alkali metal bromides that can be dissociated and ionized in water. Iodide is a compound that contains iodine, and examples include alkali metal iodides.

The amount of the bromide or iodide used can be selected within the range in which the oxidation reaction can be promoted. The total amount of the bromide and iodide is, for example, preferably 0.1 to 100 mmol, more preferably 0.1 to 10 mmol, and even more preferably 0.5 to 5 mmol, per gram of absolute dry cellulose.

As the oxidizing agent, known oxidizing agents can be used. Examples of usable oxidizing agents include halogen; hypohalous acid, halous acid, perhalogenic acid, and salts thereof; and halogen oxide and peroxide. Among these, sodium hypochlorite is preferred because it is inexpensive and has a low environmental impact.

The amount of the oxidizing agent used is, for example, preferably 0.5 to 500 mmol, more preferably 0.5 to 50 mmol, and even more preferably 1 to 25 mmol. Further, the amount of the oxidizing agent used is, for example, preferably 1 to 40 mol, per mol of the N-oxyl compound.

In the cellulose oxidation step, the reaction can proceed efficiently even under relatively mild conditions. Therefore, the reaction temperature is preferably 4 to 40°C, and may be room temperature of about 15 to 30°C. As the reaction progresses, carboxy groups are formed in cellulose; therefore, the pH of the reaction mixture decreases. To efficiently promote the oxidation reaction, it is preferable to add an alkaline solution, such as an aqueous sodium hydroxide solution, during the reaction to maintain the reaction mixture at a pH of about 8 to 12, preferably about 9 to 12, and more preferably about 10 to 12. The reaction medium is preferably water because of its ease of handling and because side reactions are unlikely to occur.

The reaction time in the oxidation reaction can be suitably set according to the degree of oxidation progression, and is generally about 0.5 to 6 hours.

The oxidation reaction may be carried out in two steps. For example, oxidized cellulose obtained by filtration after completion of the first-step reaction is oxidized again under the same or different reaction conditions, whereby the reaction is not inhibited by salts produced as by-products in the first-step reaction, and the cellulose can be oxidized efficiently.

Another example of the oxidation method is a method of oxidation by bringing an ozone-containing gas into contact with the cellulose raw material. In this oxidation reaction, hydroxy groups are oxidized at least at positions of 2 and 6 of the glucopyranose ring, and decomposition of cellulose chains also occurs.

The ozone concentration in the ozone-containing gas is preferably 50 to 250 $g/m^3$, and more preferably 50 to 220 $g/m^3$. The amount of ozone added to the cellulose raw material is preferably 0.1 to 30 parts by mass, and more preferably 5 to 30 parts by mass, based on the solids content of the cellulose raw material taken as 100 parts by mass.

The ozone treatment temperature is preferably 0 to 50°C, and more preferably 20 to 50°C. The ozone treatment time is not particularly limited, and is about 1 to 360 minutes, and preferably about 30 to 360 minutes.

After the ozone treatment, an additional oxidation treatment may be optionally performed using an oxidizing agent. The oxidizing agent used in the additional oxidation treatment is not particularly limited. Examples include chlorine compounds, such as chlorine dioxide and sodium chlorite; and oxygen, hydrogen peroxide, persulfuric acid, and peracetic acid.

For example, the additional oxidation treatment can be performed by dissolving such an oxidizing agent in water or a polar organic solvent, such as alcohol, to prepare an oxidizing-agent solution, and immersing the cellulose raw material in the solution.

The "amount of carboxy groups," which indicates the degree of modification of oxidized cellulose, can be adjusted by controlling the reaction conditions, such as the amount of the oxidizing agent added and reaction time. The amount of carboxy groups relative to the absolute dry mass of oxidized cellulose is preferably 0.80 to 1.10 mmol/g, more preferably 0.85 to 1.10 mmol/g, and even more preferably 0.90 to 1.10 mmol/g. In the present specification, when the degree of modification is indicated, the "amount of carboxy groups" refers to the total amount of carboxy groups (-COOH) and carboxylate groups (-COO-).

The amount of carboxy groups can be determined, for example, in the following manner. After 60 mL of a 0.5 mass% slurry of oxidized cellulose is prepared, a 0.1 M aqueous hydrochloric acid solution is added to adjust the pH to 2.5. The electrical conductivity is then measured until the pH reaches 11 by adding a 0.05 N aqueous sodium hydroxide solution dropwise. The amount of carboxy groups can be calculated using the following formula, based on the amount ("a") of sodium hydroxide consumed in the neutralization stage of weak acid, which shows a gradual change in electrical conductivity.

Amount of carboxy groups (mmol/g of pulp) = a (mL) $\times$ 0.05 / Mass (g) of oxidized cellulose

In principle, the degree of modification does not change during the fibrillation treatment described below. Therefore, the degree of modification of the oxidized cellulose can be regarded as the degree of modification of fibrillated cellulose nanofiber.

Fibrillation

Examples of devices used for fibrillation include, but are not limited to, high-speed rotary devices, colloid mill devices, high-pressure devices, roll mill devices, and ultrasonic devices, and preferably high-pressure or ultra-high-pressure homogenizers, and more preferably wet high-pressure or ultra-high-pressure homogenizers. The device is preferably capable of applying high shear force to the cellulose raw material or oxidized cellulose (typically in the form of a dispersion). The pressure that the device can apply is preferably 50 MPa or more, more preferably 100 MPa or more, and even preferably 140 MPa or more. The device is preferably a wet high-pressure or ultra-high-pressure homogenizer capable of applying the pressure and strong shear force to the cellulose raw material or oxidized cellulose (typically in the form of a dispersion). This allows for efficient fibrillation. The number of times of treatment (passing) using the fibrillation device can be once, twice, or more, and is preferably twice or more.

In the dispersion treatment, oxidized cellulose is usually dispersed in a solvent. The solvent for use is not particularly limited as long as it can disperse oxidized cellulose, and examples include water, organic solvents (e.g., hydrophilic organic solvents, such as methanol), and mixed solvents thereof. Since the cellulose raw material is hydrophilic, the solvent is preferably water.

The solids concentration of oxidized cellulose in the dispersion is usually 0.1 mass% or more, preferably 0.2 mass% or more, and more preferably 0.3 mass% or more. Due to this, the amount of liquid is appropriate for the amount of the cellulose fiber material, thus being efficient. The upper limit is usually 10 mass% or less, and preferably 6 mass% or less. This allows fluidity to be maintained.

There is no particular limitation on the order of fibrillation treatment and dispersion treatment, and either can be performed first or both simultaneously. However, it is preferable to carry out the fibrillation treatment after the dispersion treatment. It is sufficient to perform the combination of the treatments at least once, and the treatments may be performed two or more times, i.e., repeated.

Before the fibrillation treatment or dispersion treatment, a preliminary treatment may be carried out as necessary. The preliminary treatment may be performed by using a mixing, stirring, emulsifying, or dispersing device, such as a high-speed shear mixer.

The carboxy-containing cellulose nanofiber (C21) preferably has an average fiber diameter of 3 nm or more and 500 nm or less, more preferably 3 nm or more and 50 nm or less, and even more preferably 3 nm or more and 20 nm or less. The carboxy-containing cellulose nanofiber (C21) preferably has an average fiber length of 60 nm or more or less than 2500 nm, more preferably 75 nm or more or less than 2250 nm, and even more preferably 90 nm or more or less than 900 nm. The average fiber diameter and average fiber length of the carboxy-containing cellulose nanofiber (C21) can be measured, for example, by preparing a 0.001 mass% aqueous dispersion of the carboxy-containing cellulose nanofiber (C21), thinly spreading the diluted dispersion on a mica sample stage, and drying the dispersion by heating at 50°C to prepare a sample for observation. The cross-sectional height of the shape image observed with an atomic force microscope (AFM) is then measured to thereby calculate the number average fiber diameter or the number average fiber length.

The average aspect ratio of the carboxy-containing cellulose nanofiber (C21) is preferably 20 or more and less than 50, more preferably in the range of 25 to 45, and even more preferably in the range of 30 to 45.

The content of the carboxy-containing nanocellulose (C2) in the effect pigment dispersion of the present invention is preferably 1 to 30 parts by mass, more preferably 2 to 25 parts by mass, and even more preferably 3 to 20 parts by mass, based on 100 parts by mass of the solids of the effect pigment dispersion, from the standpoint of forming a coating film that has excellent metallic or pearly metallic or pearly luster, that does not wrinkle in edge portions, where the film thickness tends to be greater than general parts, and that is free of sagging in vertical parts.

The content ratio of the phosphate group-containing nanocellulose (C1) to the carboxy-containing nanocellulose (C2) in the effect pigment dispersion of the present invention is preferably in the range of 1/99 to 50/50, more preferably in the range of 3/97 to 45/55, and even more preferably in the range of 5/95 to 40/60, from the standpoint of forming a coating film that has excellent metallic or pearly metallic or pearly luster, that does not wrinkle in edge portions, where the film thickness tends to be greater than in general portions, and that is free of sagging in vertical portions.

Sulfonic Acid Group-containing Nanocellulose (C3)

The sulfonic acid group-containing nanocellulose (C3) preferably contains sulfonic acid group-containing cellulose nanofiber (C31) and/or sulfonic acid group-containing cellulose nanocrystal (C32), and more preferably contains sulfonic acid group-containing cellulose nanocrystal (C32), from the standpoint of forming a coating film that has excellent metallic or pearly metallic or pearly luster and that does not wrinkle in edge portions, where the film thickness tends to be greater than in general portions, and that is free of sagging in vertical portions.

The sulfonic acid group-containing cellulose nanocrystal (C32) can be produced by a known method. Specifically, the sulfonic acid group-containing cellulose nanocrystal (C32) can be produced, for example, by a chemical treatment step in which a fiber raw material containing cellulose is chemically treated and a sulfo group is introduced into the cellulose, and a hydrolysis step in which the amorphous part is hydrolyzed with concentrated sulfuric acid or the like.

The sulfonic acid group-containing cellulose nanocrystal (C32) preferably has a number average fiber diameter within the range of 1 to 50 nm, more preferably within the range of 1 to 30 nm, particularly preferably within the range of 1 to 15 nm, and more particularly preferably within the range of 1 to 5 nm, from the standpoint of forming a coating film that has excellent metallic or pearly metallic or pearly luster, that does not wrinkle in edge portions, where the film thickness tends to be greater than in general portions, and that is free of sagging in vertical portions.

The sulfonic acid group-containing cellulose nanocrystal (C32) preferably has a number average fiber length within the range of 10 to 500 nm, more preferably within the range of 10 to 300 nm, particularly preferably within the range of 20 to 250 nm, and even particularly preferably within the range of 30 to 150 nm, from the standpoint of forming a coating film that has excellent metallic or pearly metallic or pearly luster, that does not wrinkle in edge portions, where the film thickness is greater than in general portions, and that is free of sagging in vertical portions.

The number average fiber diameter and the number average fiber length are measured and calculated, for example, from an image obtained by dispersing a sample prepared by diluting sulfonic acid group-containing cellulose nanocrystal (C32) with water, casting the resulting sample on a carbon film-coated grid that has been subjected to a hydrophilization treatment, and observing the resulting sample with a transmission electron microscope (TEM).

The ratio of the number average fiber length to the number average fiber diameter (number average fiber length/number average fiber diameter) of the sulfonic acid group-containing cellulose nanocrystal (C32) is preferably 3 or more and less than 50, more preferably 5 or more and less than 50, and even more preferably 10 or more and less than 50, from the standpoint of forming a coating film that has excellent metallic or pearly metallic or pearly luster, that does not wrinkle in edge portions, where the film thickness tends to be greater than in general portions, and that is free of sagging in vertical portions.

The content of the sulfonic acid group-containing nanocellulose (C3) in the effect pigment dispersion of the present invention is preferably 1 to 30 parts by mass, more preferably 2 to 25 parts by mass, and even more preferably 3 to 20 parts by mass, based on 100 parts by mass of the solids of the effect pigment dispersion, from the standpoint of forming a coating film that has excellent metallic or pearly metallic or pearly luster, that does not wrinkle in edge portions, where the film thickness tends to be greater than in general portions, and that is free of sagging in vertical portions.

The content ratio of the phosphate group-containing nanocellulose (C1) to the sulfonic acid group-containing nanocellulose (C3) in the effect pigment dispersion of the present invention, in terms of mass ratio ((C1)/(C3)), is preferably within the range of 1/99 to 50/50, more preferably within the range of 3/97 to 45/55, and even more preferably within the range of 5/95 to 40/60, from the standpoint of forming a coating film that has excellent metallic or pearly metallic or pearly luster, that does not wrinkle in edge portions, where the film thickness is greater than in general portions, and that is free of sagging in vertical portions.

The content ratio of the phosphate group-containing nanocellulose (C1) to at least one selected from the group consisting of carboxy-containing nanocellulose (C2) and sulfonic acid group-containing nanocellulose (C3) in the effect pigment dispersion of the present invention, in terms of mass ratio ((C1)/[(C2) and (C3)]), is preferably in the range of 1/99 to 50/50, more preferably in the range of 3/97 to 45/55, and even more preferably in the range of 5/95 to 40/60, from the standpoint of forming a coating film that has excellent metallic or pearly metallic or pearly luster, that does not wrinkle in edge portions, where the film thickness tends to be greater than in general portions, and that is free of sagging in vertical portions.

The content of the nanocellulose (C) in the effect pigment dispersion of the present invention is preferably 1 to 30 parts by mass, more preferably 2 to 25 parts by mass, and even more preferably 3 to 20 parts by mass, based on 100 parts by mass of the solids of the effect pigment dispersion, from the standpoint of forming a coating film that has excellent metallic or pearly metallic or pearly luster, that does not wrinkle in edge portions, where the film thickness tends to be greater than in general portions, and that is free of sagging in vertical portions.

Effect Pigment Dispersion

The effect pigment dispersion of the present invention is an effect pigment dispersion containing

a wetting agent (A),
an effect pigment (B),
nanocellulose (C), and
water (D),

wherein

the effect pigment dispersion has a solids content of 0.1 to 10 parts by mass per 100 parts by mass of all of the components of the effect pigment dispersion, and
the nanocellulose (C) contains phosphate group-containing nanocellulose (C1) and at least one member selected from the group consisting of carboxy-containing nanocellulose (C2) and sulfonic acid group-containing nanocellulose (C3).

The content of water (D) in the effect pigment dispersion of the present invention is preferably within the range of 50 to 95 parts by mass, more preferably within the range of 60 to 90 parts by mass, and even more preferably within the range of 70 to 90 parts by mass, per 100 parts by mass of the total of all of the components of the effect pigment dispersion, from the standpoint of forming a coating film that has excellent metallic or pearly metallic or pearly luster, that does not wrinkle in edge portions, where the film thickness tends to be greater than in general portions, and that is free of sagging in vertical portions.

The solids content is preferably in the range of 0.5 to 8 parts by mass, and more preferably in the range of 1.5 to 6 parts by mass, per 100 parts by mass of all of the components of the effect pigment dispersion, from the standpoint of forming a coating film that has excellent metallic or pearly metallic or pearly luster, and that does not wrinkle in edge portions, where the film thickness tends to be greater than in general portions, and that is free of sagging in vertical portions.

The effect pigment dispersion of the present invention may also contain an aqueous resin dispersion from the standpoint of water resistance of the resulting coating film.

Resin Aqueous Dispersion

The aqueous resin dispersion is a dispersion of a resin in an aqueous solvent and may contain, for example, at least one member selected from the group consisting of an aqueous urethane resin dispersion, an aqueous acrylic resin dispersion, an aqueous polyester resin dispersion, an aqueous olefin resin dispersion, and a composite of these resins. The aqueous dispersion may be modified.

Of these, an aqueous urethane resin dispersion and an aqueous acrylic resin dispersion are preferable, and an aqueous hydroxy-containing urethane resin dispersion and an aqueous hydroxy-containing acrylic resin dispersion are more preferable, from the standpoint of water resistance of the obtained coating film.

The aqueous hydroxy-containing acrylic resin dispersion is particularly preferably a core-shell dispersion.

When the effect pigment dispersion of the present invention contains an aqueous resin dispersion, the content of the aqueous resin dispersion is preferably 1 to 60 parts by mass, and more preferably 5 to 40 parts by mass, per 100 parts by mass of the solids of the effect pigment dispersion.

Other Components

The effect pigment dispersion may further suitably contain an organic solvent, a pigment other than the effect pigment (B), a rheology control agent other than the nanocellulose (C), a binder resin other than the aqueous resin dispersion, a crosslinking component, a pigment dispersant, an antisettling agent, an ultraviolet absorber, a light stabilizer, and the like, if necessary.

Examples of pigments other than the effect pigment (B) include color pigments and extender pigments.

Examples of color pigments include titanium oxide, zinc oxide, carbon black, molybdenum red, Prussian blue, cobalt blue, azo pigments, phthalocyanine pigments, quinacridone pigments, isoindoline pigments, threne pigments, perylene pigments, dioxazine pigments, and diketopyrrolopyrrole pigments. Among these, carbon black can be preferably used.

When the effect pigment dispersion of the present invention contains a color pigment, the color pigment content is preferably within the range of 0.1 to 10 parts by mass, and more preferably within the range of 0.5 to 5 parts by mass, based on 100 parts by mass of the solids of the effect pigment dispersion.

Examples of the extender pigment include clay, kaolin, barium sulfate, barium carbonate, calcium carbonate, talc, silica, and alumina white.

When the effect pigment dispersion of the present invention contains an extender pigment, the extender pigment content is preferably within the range of 0.1 to 10 parts by mass, and more preferably within the range of 0.5 to 5 parts by mass, based on 100 parts by mass of the solids of the effect pigment dispersion.

Examples of rheology control agents other than the nanocellulose (C) include polyacrylic acid-based rheology control agents, polyamide-based rheology control agents, mineral-based rheology control agents, cellulose-based rheology control agents (excluding nanocellulose), and polysaccharide-based rheology control agents. Among these, a polyacrylic acid-based rheology control agent is preferably used from the standpoint of forming a coating film that does not wrinkle in edge portions, where the film thickness tends to be greater than in general portions, and that is free of sagging in vertical portions.

Examples of the polyacrylic acid-based rheology control agent include sodium polyacrylate and polyacrylic acid-(meth)acrylic acid ester copolymers.

Examples of commercial products of the polyacrylic acid-based rheology control agent include Primal ASE-60, Primal TT615, and Primal RM5 (trade names, all produced by The Dow Chemical Company); and SN Thickener 613, SN Thickener 618, SN Thickener 630, SN Thickener 634, and SN Thickener 636 (trade names, all produced by San Nopco Limited). The acid value of the solids of the polyacrylic acid-based rheology control agent is in the range of 30 to 300 mg KOH/g, and preferably 80 to 280 mg KOH/g.

The polyamide-based rheology control agent includes polyamide amine salts and fatty acid polyamide.

Examples of mineral-based rheology control agents include swelling laminar silicates that have a 2:1 crystalline structure. Specific examples include smectite group clay minerals, such as natural or synthetic montmorillonite, saponite, hectorite, stevensite, beidellite, nontronite, bentonite, and laponite; swelling mica group clay minerals, such as Na-tetrasilicic fluorine mica, Li-tetrasilicic fluorine mica, Na salt-fluorine taeniolite, and Li-fluorine taeniolite; and vermiculite; substitution products and derivatives thereof; and mixtures thereof.

Examples of cellulose-based rheology control agents (excluding nanocellulose) include carboxymethyl cellulose, methylcellulose, hydroxyethyl cellulose, hydroxyethyl methylcellulose, and hydroxypropyl methylcellulose.

Examples of polysaccharide rheology control agents include guar gum, xanthan gum, and locust bean gum.

When the effect pigment dispersion of the present invention contains a rheology control agent other than the nanocellulose (C), the content is preferably in the range of 1 to 30 parts by mass, more preferably in the range of 3 to 20 parts by mass, based on 100 parts by mass of the solids of the effect pigment dispersion.

When the effect pigment dispersion contains the above aqueous resin dispersion, the crosslinking component is a component for crosslinking and curing the aqueous resin dispersion by heating. When the effect pigment dispersion does not contain the aqueous resin dispersion, the crosslinking component may be a self-crosslinkable component or may be a component for crosslinking and curing the crosslinking component with some of a colored paint for forming a colored coating film described below or with some of a clear paint for forming a clear coating film described below. Examples of crosslinking components include amino resins, urea resins, polyisocyanate compounds, blocked polyisocyanate compounds, epoxy-containing compounds, carboxy-containing compounds, carbodiimide group-containing compounds, hydrazide group-containing compounds, semicarbazide group-containing compounds, and silane coupling agents. Of these, amino resins reactive with a hydroxy group, polyisocyanate compounds, blocked polyisocyanate compounds, and carbodiimide group-containing compounds reactive with a carboxy group are preferable. The polyisocyanate compounds and blocked polyisocyanate compounds that can be used include those described below in the section "Clear Paint." The crosslinking components can be used singly or in a combination of two or more.

When the effect pigment dispersion of the present invention contains a crosslinking component, the crosslinking component content is, on a solids basis, preferably 0.5 to 100 parts by mass, more preferably 1 to 95 parts by mass, and even more preferably 2 to 90 parts by mass, per 100 parts by mass of the effect pigment (B) in the effect paint dispersion of the present invention, from the standpoint of, for example, water resistance of the obtained coating film.

When the effect pigment dispersion contains a crosslinking component, the crosslinking component content is, on a solids basis, preferably 1 to 200 parts by mass, more preferably 2 to 150 parts by mass, and even more preferably 3 to 100 parts by mass, per 100 parts by mass of the solids content of the effect pigment (B) in the effect pigment dispersion, from the viewpoints of metallic or pearly luster and waterproof adhesion of the coating film.

Viscosity

From the standpoint of forming a coating film that has excellent metallic or pearly metallic or pearly luster, that does not wrinkle in edge portions, where the film thickness tends to be greater than in general portions, and that is free of sagging in vertical portions, the effect pigment dispersion of the present invention preferably has a viscosity of 400 to 10000 mPa·sec, more preferably 500 to 8000 mPa·sec, and even more preferably 600 to 6000 mPa·sec, as measured with a viscometer at a rotational speed of 6 revolutions per minute (6 rpm).

Viscosity is defined as the viscosity 1 minute after the start of measurement under predetermined conditions. Specifically, a prepared effect pigment dispersion is placed in a predetermined container and mixed by stirring with a rotary stirrer with the rotational speed set to 1000 revolutions per minute, until the dispersion becomes homogeneous. Thereafter, the measurement of the viscosity at 6 rpm at a temperature of 20°C using a Brookfield viscometer is started, and the viscosity 1 minute after the start of measurement (also referred to herein as the "B6 value") is determined. The viscometer used in this measurement is an LVDV-I (trade name, produced by Brookfield, a Brookfield viscometer). A rotational speed of 6 rpm is a typical condition for controlling the viscosity of pseudoplastic fluid.

Method for Forming Multilayer Coating Film

The method for forming the multilayer coating film of the present invention comprises the following steps:

step (1): applying a base paint (X) to a substrate to form an uncured base coating film;
step (2): applying the effect pigment dispersion of the present invention to the base coating film formed in step (1) to form an uncured effect coating film;
step (3): applying a clear paint (Z) to the effect coating film formed in step (2) to form an uncured clear coating film; and
step (4): simultaneously heating the uncured base coating film formed in step (1), the uncured effect coating film formed in step (2), and the uncured clear coating film formed in step (3) to cure the films.

Substrate

The multilayer coating film of the present invention is formed on the substrate described below.

Examples of substrates include metal materials, including metals, such as iron, zinc, and aluminum, and alloys containing these metals; molded products of these metals; molded products of, for example, glass, plastic, or foam; and films. Depending on the material used, the material can be subjected to degreasing treatment or surface treatment to prepare a substrate. Examples of surface treatments include phosphate treatment, chromate treatment, and composite oxide treatment. When the material of the substrate is metal, it is preferred that an undercoating film be formed on a surface-treated metal material using, for example, a cationic electrodeposition paint. When the material of the substrate is plastic, it is preferred that a primer coating film be formed on a degreased plastic material using a primer paint.

Base Paint (X)

Specific examples of the base paint (X) that can be used include known thermosetting paints that contain a base resin, a crosslinking agent, a pigment, and a solvent, such as an organic solvent and/or water, as main components.

Examples of base resins that can be used in the base paint (X) include thermosetting resins and resins curable at room temperature. From the standpoints of, for example, water resistance, chemical resistance, and weatherability, thermosetting resins are preferable for use.

The base resin preferably has excellent weatherability and transparency. Specific examples of base resins include acrylic resins, polyester resins, epoxy resins, and urethane resins.

Examples of the acrylic resins include resins obtained by copolymerizing an $\alpha,\beta$-ethylenically unsaturated carboxylic acid, a (meth)acrylic acid ester having a functional group, such as a hydroxy group, an amide group, a methylol group, or an epoxy group, other (meth)acrylic acid esters, styrene, and the like.

Examples of polyester resins include polyester resins obtained by a condensation reaction of a polyhydric alcohol, such as ethylene glycol, propylene glycol, butylene glycol, 1,6-hexanediol, trimethylolpropane, or pentaerythritol, with a polyvalent carboxylic acid component, such as adipic acid, isophthalic acid, terephthalic acid, phthalic anhydride, hexahydrophthalic anhydride, or trimellitic anhydride.

Examples of epoxy resins include bisphenol A epoxy resins produced by a condensation reaction of bisphenol A with epichlorohydrin.

Examples of urethane resins include compounds obtained by an addition reaction of a diisocyanate compound with a polyhydric alcohol, and urethane resins whose molecular weight is increased by reacting the above-mentioned acrylic resin, polyester resin, or epoxy resin with a diisocyanate compound.

The base paint (X) for use may be an aqueous paint or a solvent-based paint. From the standpoint of reducing the VOC content of the paint, the base paint (X) is preferably an aqueous paint. When the base paint (X) is an aqueous paint, the base resin for use can be a resin that contains a hydrophilic group, such as a carboxy group, a hydroxy group, a methylol group, an amino group, or a sulfonate group, or a polyoxyethylene bond, most typically a carboxy group in an amount sufficient to solubilize or disperse the resin in water, and the hydrophilic group is neutralized to form an alkali salt, whereby the base resin can be solubilized or dispersed in water. The amount of the hydrophilic group, such as carboxy, for use in doing this is not particularly limited, and can be freely determined depending on the solubility or dispersibility in water. The amount of hydrophilic groups is typically about 10 mg KOH/g or more, and preferably in the range of 30 to 200 mg KOH/g, based on the acid value. Examples of alkaline substances for use in neutralization include sodium hydroxide and amine compounds.

The resin can be dispersed in water by subjecting the polymerizable component to emulsion polymerization in the presence of a surfactant and a water-soluble resin. The aqueous dispersion of the resin can also be obtained by dispersing the resin in water in the presence of, for example, an emulsifier. In the dispersion of resin in water, the base resin may be completely free of hydrophilic groups or may contain hydrophilic groups in an amount smaller than the amount contained in the water-soluble resin described above.

The crosslinking agent is used for crosslinking and curing the base resin by heating. The crosslinking agent can be selected from those mentioned as examples of the crosslinking component in the section "Effect Pigment Dispersion."

The proportions of the components in the base paint (X) can be freely determined, as necessary. From the standpoints of, for example, water resistance and finish appearance, it is preferred that the proportion of the base resin be typically 60 to 90 mass%, and particularly 70 to 85 mass%, based on the total mass of the base resin and crosslinking agent, and that the proportion of the crosslinking agent be typically 10 to 40 mass%, and particularly 15 to 30 mass%, based on the total mass of the base resin and crosslinking agent.

The pigment imparts, for example, luster, a color, and substrate hiding power to the base coating film formed using the base paint (X). The type and amount of the pigment can be suitably adjusted depending on the hue or lightness desired for the multilayer coating film.

Examples of the pigment include effect pigments, color pigments, and extender pigments.

The thickness of the cured film of the base coating film formed using the base paint (X) is preferably in the range of 3 $\mu$m to 50 $\mu$m, more preferably in the range of 5 to 45 $\mu$m, and even more preferably in the range of 7 to 40 $\mu$m, from the standpoints of substrate hiding power and metallic or pearly luster of the multilayer coating film.

The base paint (X) can be applied by a usual method. When the base paint (X) is an aqueous paint, deionized water, optionally with additives such as a thickener and an antifoaming agent, is added to the base paint (X) so that the solids content is adjusted to about 10 to 70 mass% and the viscosity is adjusted to 500 to 6000 cps/6 rpm (Brookfield viscometer). The adjusted paint is then applied to the surface of a substrate by, for example, spray coating or rotary atomization coating. In particular, from the standpoint of forming a multi-layer coating film that does not wrinkle in edge portions, where the film thickness tends to be greater than in the general portions, the solids content is preferably set within the range of 10 to 20 mass%. During the coating process, an electrostatic charge can also be applied, if necessary.

The base paint (X) preferably has a monochrome hiding film thickness of 80 $\mu$m or less, more preferably 10 to 60 $\mu$m, and even more preferably 15 to 50 $\mu$m, from the standpoint of, for example, color stability. In the present specification, the "monochrome hiding film thickness" refers to a value determined in the following manner. After a monochrome checkered-pattern hiding power test paper specified in section 4.1.2 of JIS K5600-4-1 is attached to a steel plate, paint is applied by inclined coating so that the film thickness continuously varies, and the resulting coating film is dried or cured. The coating surface is then visually observed under diffused daylight, and the minimum film thickness at which the boundary between black and white of the checkered pattern of the hiding power test paper is no longer visible is measured with an electromagnetic film thickness meter.

When the effect pigment dispersion is applied to an uncured base coating film formed of the base paint (X), the effect pigment dispersion of the present invention can be applied after the base paint (X) is applied and allowed to stand at room temperature for 15 to 30 minutes or heated at a temperature of 50 to 100°C for 30 seconds to 10 minutes.

Coating with Effect Pigment Dispersion (Y)

The effect pigment dispersion (Y) can be applied by electrostatic coating, air spray, airless spray, or like methods. In such coating methods, electrostatic charges may optionally be applied, if necessary. In the method for forming a multilayer coating film according to the present invention, rotary atomization electrostatic coating is particularly preferable.

The dry film thickness of the effect coating film is preferably 0.025 to 3 $\mu$m, and more preferably 0.15 to 2.5 $\mu$m.

A clear paint (Z) can be applied after the effect pigment dispersion (Y) is applied and allowed to stand at room temperature for 15 to 30 minutes, or after the effect pigment dispersion is applied and heated at a temperature of 50 to 100°C for 30 seconds to 10 minutes.

Clear Paint (Z)

The clear paint (Z) for use may be any known thermosetting clear paint composition. Examples of thermosetting clear paint compositions include organic solvent-based thermosetting paint compositions, aqueous thermosetting paint compositions, and powdery thermosetting paint compositions, each containing a base resin having a crosslinking functional group and a curing agent.

Examples of crosslinking functional groups present in the base resin include carboxy groups, hydroxy groups, epoxy groups, and silanol groups. Examples of the type of base resin include acrylic resins, polyester resins, alkyd resins, urethane resins, epoxy resins, and fluororesins. Examples of curing agents include polyisocyanate compounds, blocked polyisocyanate compounds, melamine resins, urea resins, carboxy-containing compounds, carboxy-containing resins, epoxy-containing resins, and epoxy-containing compounds.

The combination of a base resin and a curing agent in the clear paint (Z) is, for example, preferably a combination of a carboxy-containing resin and an epoxy-containing resin, a combination of a hydroxy-containing resin and a polyisocyanate compound, a combination of a hydroxy-containing resin and a blocked polyisocyanate compound, and a combination of a hydroxy-containing resin and a melamine resin.

The clear paint (Z) may be a one-component paint or a multiple-component paint, such as a two-component paint.

In particular, the clear paint (Z) is preferably a two-component clear paint containing the hydroxy-containing resin and the polyisocyanate compound described below, from the standpoint of the adhesion of the obtained coating film.

Hydroxy-containing Resin

The hydroxy-containing resin for use can be any known resin that has a hydroxy group, without any limitation. Examples of the hydroxy-containing resin include hydroxy-containing acrylic resins, hydroxy-containing polyester resins, hydroxy-containing polyether resins, and hydroxy-containing polyurethane resins, preferably hydroxy-containing acrylic resins and hydroxy-containing polyester resins, and particularly preferably hydroxy-containing acrylic resins.

The hydroxy-containing acrylic resin preferably has a hydroxy value of 80 to 200 mg KOH/g, and more preferably 100 to 180 mg KOH/g, from the standpoints of scratch resistance and water resistance of the coating film.

The hydroxy-containing acrylic resin preferably has a weight average molecular weight of 2500 to 40000, and more preferably 5000 to 30000, from the standpoints of acidity resistance and smoothness of the coating film.

In the present specification, the "weight average molecular weight" refers to a value calculated from a chromatogram measured by gel permeation chromatography based on the molecular weight of standard polystyrene. For the gel permeation chromatography, an HLC8120GPC (produced by Tosoh Corporation) was used. The measurement was conducted using four columns (TSKgel G-4000HXL, TSKgel G-3000HXL, TSKgel G-2500HXL, and TSKgel G-2000HXL (trade names, all produced by Tosoh Corporation)) under the following conditions: mobile phase: tetrahydrofuran; measuring temperature: 40°C; flow rate: 1 cc/min; detector: RI.

The glass transition temperature of the hydroxy-containing acrylic resin is preferably -40°C to 20°C, and particularly preferably -30°C to 10°C. A glass transition temperature of -40°C or more leads to sufficient coating film hardness. A glass transition temperature of 20°C or less enables the coating film to maintain smoothness of the coating surface.

Polyisocyanate Compound

The polyisocyanate compound is a compound having at least two isocyanate groups per molecule. Examples include aliphatic polyisocyanates, alicyclic polyisocyanates, aromatic-aliphatic polyisocyanates, aromatic polyisocyanates, and derivatives of these polyisocyanates.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, and methylenebis(4,1-cyclohexanediyl)diisocyanate (common name: hydrogenated MDI), and norbornane diisocyanate; and alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethy-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of aromatic-aliphatic polyisocyanates include aromatic-aliphatic diisocyanates, such as methylenebis(4,1-phenylene) diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; and aromatic-aliphatic triisocyanates, such as 1,3,5-triisocyanatomethylbenzene.

Examples of the aromatic polyisocyanate include aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI), or 2,6-tolylene diisocyanate (common name: 2,6-TDI) or mixtures thereof, 4,4'-toluidine diisocyanate, and 4,4'-diphenylether diisocyanate; aromatic triisocyanates, such as triphenylmethane-4,4',4"-triisocyanate, 1,3,5-triisocyanatobenzene, and 2,4,6-triisocyanatotoluene; and aromatic tetraisocyanates, such as 4,4'-diphenylmethane-2,2',5,5'-tetraisocyanate.

Examples of derivatives of polyisocyanates include dimers, trimers, biurets, allophanates, urethodiones, urethoimines, isocyanurates, oxadiazinetriones, polymethylene polyphenyl polyisocyanates (crude MDI, polymeric MDI), or crude TDI of the polyisocyanates described above. The polyisocyanate derivatives may be used singly or in a combination of two or more.

These polyisocyanates and derivatives thereof may be used singly or in a combination of two or more.

Among the aliphatic diisocyanates, hexamethylene diisocyanate-based compounds are preferably used. Among the alicyclic diisocyanates, 4,4'-methylenebis(cyclohexyl isocyanate) is preferably used. Among these, derivatives of hexamethylene diisocyanate are most preferable, in particular, from the standpoints of, for example, adhesion and compatibility.

The polyisocyanate compound for use may also be a prepolymer that is formed by reacting the polyisocyanate or a derivative thereof with a compound reactive with the polyisocyanate, such as a compound having an active hydrogen group, such as a hydroxy group or an amino group, under the condition that an excessive amount of isocyanate groups is present. Examples of the compound reactive with the polyisocyanate include polyhydric alcohols, low-molecular-weight polyester resins, amines, and water.

The polyisocyanate compound for use can also be, for example, a blocked polyisocyanate compound in which some or all of the isocyanate groups of the polyisocyanate or a derivative thereof are blocked with a blocking agent.

Examples of blocking agents include phenols, such as phenol, cresol, xylenol, nitrophenol, ethylphenol, hydroxydiphenyl, butylphenol, isopropylphenol, nonylphenol, octylphenol, and methyl hydroxybenzoate; lactams, such as ε-caprolactam, δ-valerolactam, γ-butyrolactam, and β-propiolactam; aliphatic alcohols, such as methanol, ethanol, propyl alcohol, butyl alcohol, amyl alcohol, and lauryl alcohol; ethers, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohols, such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oximes, such as formamide oxime, acetamide oxime, acetoxime, methyl ethyl ketoxime, diacetyl monoxime, benzophenone oxime, and cyclohexane oxime; active methylenes, such as dimethyl malonate, diethyl malonate, ethyl acetoacetate, methyl acetoacetate, and acetylacetone; mercaptans, such as butyl mercaptan, t-butyl mercaptan, hexyl mercaptan, t-dodecyl mercaptan, 2-mercaptobenzothiazole, thiophenol, methylthiophenol, and ethylthiophenol; acid amides, such as acetanilide, acetanisidide, acetotoluide, acrylamide, methacrylamide, amide acetate, amide stearate, and benzamide; imides, such as succinimide, phthalimide, and maleimide; amines, such as diphenylamine, phenylnaphthylamine, xylidine, N-phenylxylidine, carbazole, aniline, naphthylamine, butylamine, dibutylamine, and butylphenylamine; imidazoles, such as imidazole and 2-ethylimidazole; ureas, such as urea, thiourea, ethylene urea, ethylenethiourea, and diphenylurea; carbamic acid esters, such as phenyl N-phenylcarbamate; imines, such as ethyleneimine and propyleneimine; sulfites, such as sodium bisulfite and potassium bisulfite; and azole-based compounds. Examples of azole-based compounds include pyrazole or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives, such as imidazole, benzimidazole, 2-methylimidazole, 2-ethylimidazole, and 2-phenylimidazole; and imidazoline derivatives, such as 2-methylimidazoline and 2-phenylimidazoline.

Blocking (reacting with a blocking agent) can be performed by optionally adding a solvent. The solvent for use in the blocking reaction is preferably not reactive with isocyanate groups. Examples of solvents include ketones, such as acetone and methyl ethyl ketone; esters, such as ethyl acetate; and N-methyl-2-pyrrolidone (NMP).

The polyisocyanate compounds can be used singly or in a combination of two or more.

In the present invention, the equivalent ratio of the hydroxy groups in the hydroxy-containing resin to the isocyanate groups in the polyisocyanate compound (OH/NCO) is preferably 0.5 to 2.0, and more preferably 0.8 to 1.5, from the standpoints of, for example, curability and scratch resistance of the coating film.

When a two-component clear paint containing a hydroxy-containing resin and a polyisocyanate compound is used as a clear paint (Z), the hydroxy-containing resin and the polyisocyanate compound are preferably in a separated form, from the standpoint of storage stability, and they are preferably mixed and prepared into a two-component paint immediately before use.

The clear paint (Z) for use may be a one-component paint. The combination of the base resin and the curing agent in such a one-component paint includes a combination of a carboxy-containing resin and an epoxy-containing resin, a combination of a hydroxy-containing resin and a blocked polyisocyanate compound, and a combination of a hydroxy-containing resin and a melamine resin.

The clear paint (Z) may further optionally contain a solvent, such as water or an organic solvent; and additives, such as a curing catalyst, an antifoaming agent, and an ultraviolet absorber.

The clear paint (Z) may suitably contain a color pigment in such an amount that transparency is not impaired. The color pigment may be a single pigment known for use in ink or paints, or a combination of two or more of such pigments. Although the amount of the color pigment can be suitably determined, the amount of the color pigment is 30 parts by mass or less, and preferably 0.01 to 10 parts by mass, per 100 parts by mass of the vehicle-forming resin composition in the clear paint.

The form of the clear paint (Z) is not particularly limited. The clear paint for use is typically an organic solvent-based paint composition. Examples of organic solvents for use in this case include various organic solvents for paints, such as aromatic or aliphatic hydrocarbon solvents, ester solvents, ketone solvents, and ether solvents. The organic solvent for use may be the solvent used in the preparation of, for example, the hydroxy-containing resin, or other organic solvents may be further added to the solvent as appropriate.

The clear paint (Z) has a solids concentration of preferably about 30 to 70 mass%, and more preferably about 40 to 60 mass%.

The clear paint (Z) is applied to the effect coating film. The method for applying the clear paint (Z) is not particularly limited, and the clear paint (Z) can be applied by the same method as for the colored paint (X). For example, the clear paint can be applied by a coating method such as air spray coating, airless spray coating, rotary atomization coating, or curtain coating. In such coating methods, electrostatic charges may optionally be applied. Of these methods, rotary atomization coating using electrostatic charges is preferable. A preferable amount of the clear paint (Z) to be applied is usually an amount to achieve a thickness of the cured film of about 10 to 50 μm.

When the clear paint (Z) is applied, it is preferable to suitably adjust the viscosity of the clear paint (Z) to fall within a viscosity range suitable for the coating method. For example, for rotary atomization coating using electrostatic charges, it is preferable to suitably adjust the viscosity of the clear paint by using a solvent, such as an organic solvent, so as to fall within a range of about 15 to 60 seconds as measured with a Ford cup No. 4 viscometer at 20°C.

The method for forming a multilayer coating film according to the present invention comprises the step of simultaneously heating a colored coating film, an effect coating film, and a clear coating film to cure these three coating films.

Heating can be performed by a known means, such as by using a drying furnace, such as a hot-blast furnace, an electric furnace, or an infrared-guided heating furnace. A suitable heating temperature is within the range of 70 to 150°C, and preferably 80 to 140°C. The heating time is not particularly limited, and is preferably 10 to 40 minutes, and more preferably 20 to 30 minutes.

Examples

The present invention is described below more specifically with reference to Examples and Comparative Examples. However, the present invention is not limited to only these Examples. Note that the parts and percentages referred to herein are all by mass unless otherwise specified.

[1] Production of Substrate

Cationic electrodeposition paint Elecron GT-10 (trade name, produced by Kansai Paint Co., Ltd., an epoxy resin polyamine-based cationic resin containing a blocked polyisocyanate compound as a crosslinking agent) was applied by electrodeposition to a degreased and zinc phosphate-treated steel plate (JISG3141, size: 400 mm x 300 mm x 0.8 mm) to a film thickness of 20 $\mu$m in terms of cured coating film thickness. The resulting film was heated at 170°C for 20 minutes to allow the coating film to be crosslinked and cured, thus forming an electrodeposition coating film.

TP-90 No. 8101 Gray (trade name, produced by Kansai Paint Co., Ltd., a hydroxy/melamine and blocked isocyanate curable one-component organic solvent-based paint) was applied to the electrodeposition coating surface of the resulting steel sheet by air spraying to achieve a film thickness of 40 $\mu$m in terms of cured coating film thickness, allowed to stand for 7 minutes, then heated at 140°C for 30 minutes to form an intermediate coating film, thus forming a substrate.

[2] Preparation of Paint

Production of Aqueous Acrylic Resin Dispersion (R-1)

Production Example 1

70.7 parts of deionized water and 0.52 parts of Aqualon KH-10 (trade name, produced by Dai-ichi Kogyo Seiyaku Co., Ltd., an emulsifier, active ingredient: 97%) were placed in a reaction vessel equipped with a thermometer, a thermostat, a stirrer, a reflux condenser, and a dropping funnel. The resulting mixture was stirred and mixed in nitrogen stream and heated to 80°C. Subsequently, 1% of the entire amount of the monomer emulsion described below and 5 parts of a 6% ammonium persulfate aqueous solution were introduced into the reactor vessel, and the resulting mixture was maintained at 80°C for 15 minutes. The remaining monomer emulsion was then added dropwise to the reaction vessel maintained at the same temperature for 3 hours. After completion of the dropwise addition, the mixture was aged for 1 hour. Then, while 40 parts of a 5% 2-(dimethylamino)ethanol aqueous solution was gradually added to the reaction vessel, the reaction mixture was cooled to 30°C and discharged while being filtered through a 100-mesh nylon cloth, thereby obtaining an acrylic-resin aqueous dispersion (R-1) with a solids concentration of 45%. The obtained acrylic-resin aqueous dispersion (R-1) had a hydroxy value of 43 mg KOH/g and an acid value of 12 mg KOH/g.
Monomer Emulsion: 50 parts of deionized water, 10 parts of styrene, 40 parts of methyl methacrylate, 35 parts of ethyl acrylate, 3.5 parts of n-butyl methacrylate, 10 parts of 2-hydroxy ethyl methacrylate, 1.5 parts of acrylic acid, 1.0 part of Aqualon KH-10, and 0.03 parts of ammonium persulfate were mixed with stirring, thereby obtaining a monomer emulsion.

Production of Hydroxy-containing Polyester Resin Solution (R-2) Production Example 2

174 parts of trimethylolpropane, 327 parts of neopentyl glycol, 352 parts of adipic acid, 109 parts of isophthalic acid, and 101 parts of 1,2-cyclohexanedicarboxylic anhydride were placed in a reaction vessel equipped with a thermometer, a thermostat, a stirrer, a reflux condenser, and a water separator. After the temperature was increased from 160°to 230°C over a period of 3 hours, the temperature was maintained at 230°C while the generated condensed water was distilled off with the water separator to allow the reaction to proceed until an acid value of 3 mg KOH/g or less had been achieved. 59 parts of trimellitic anhydride was added to this reaction product, and addition reaction was performed at 170°C for 30 minutes, followed by cooling to 50°C or less. 2-(Dimethylamino) ethanol was added to acid groups in an equivalent amount to the acid groups to neutralize the reaction product. Deionized water was then gradually added, thereby obtaining a hydroxy-containing polyester resin solution (R-2) with a solids concentration of 45%. The obtained hydroxy-containing polyester resin (R-2) had a hydroxy value of 128 mg KOH/g, an acid value of 35 mg KOH/g, and a weight average molecular weight of 13,000.

Production of Phosphate Group-containing Resin Solution (R-3) Production Example 3

A combined solvent containing 27.5 parts of methoxy propanol and 27.5 parts of isobutanol was placed in a reaction vessel equipped with a thermometer, a thermostat, a stirrer, a reflux condenser, and a dropping funnel, and heated to 110°C. 121.5 parts of a mixture containing 25 parts of styrene, 27.5 parts of n-butyl methacrylate, 20 parts of isostearyl acrylate (trade name, produced by Osaka Organic Chemical Industry Ltd., branched, higher alkyl acrylate), 7.5 parts of 4-hydroxybutyl acrylate, 15 parts of the following phosphate group-containing polymerizable monomer, 12.5 parts of 2-methacryloyloxyethyl acid phosphate, 10 parts of isobutanol, and 4 parts of t-butylperoxy octanoate was added to the combined solvent over a time period of 4 hours. A mixture containing 0.5 parts of t-butylperoxy octanoate and 20 parts of isopropanol was further added dropwise thereto for 1 hour. The resulting mixture was then stirred for 1 hour to obtain a phosphate group-containing resin solution (R-3) having a solids concentration of 50%. The resin had an acid value derived from the phosphate group of 83 mgKOH/g, a hydroxy value of 29 mgKOH/g, and a weight average molecular weight of 10,000.

Phosphate Group-containing Polymerizable Monomer

57.5 parts of monobutyl phosphate and 41 parts of isobutanol were placed in a reaction vessel equipped with a thermometer, a thermostat, a stirrer, a reflux condenser, and a dropping funnel, and heated to 90°C. 42.5 parts of glycidyl methacrylate was then added dropwise over a period of 2 hours, followed by aging with stirring for 1 hour. 59 parts of isopropanol was then added, thus obtaining a phosphate group-containing polymerizable monomer solution with a solids concentration of 50%. The obtained monomer had an acid value derived from the phosphate groups of 285 mg KOH/g.

Production of Color Pigment Dispersion (P-1)

Production Example 4

56 parts (solids content: 25 parts) of the hydroxy-containing polyester resin solution (R-2) obtained in Production Example 2, 1.5 parts of RAVEN 5000 ULTRA III I BEADS (trade name, carbon black pigment, produced by Columbian Carbon Co., Ltd.), and 5 parts of deionized water were mixed, and the mixture was adjusted to a pH of 8.0 with 2-(dimethylamino)ethanol. The resulting mixture was then placed in a wide-mouthed glass bottle, and glass beads having a diameter of about 1.3 mm were added as a dispersion medium. The bottle was sealed, and the mixture was dispersed using a paint shaker for 30 minutes to obtain a color pigment dispersion (P-1).

Production of Effect Pigment Dispersion (P-2)

Production Example 5

10.8 parts (solids content: 8 parts) of GX-3100 (trade name, an aluminum pigment paste, produced by Asahi Kasei Metals Corporation, metal content: 74%), 35 parts of 2-ethyl-1-hexanol, 8 parts (solids content: 4 parts) of the phosphate group-containing resin solution (R-3) obtained in Production Example 3, and 0.2 parts of 2-(dimethylamino) ethanol were homogeneously mixed in a stirring-mixing vessel to obtain an effect pigment dispersion (P-2).

Production of Base Paint (X)

Production Example 6

62.5 parts of the pigment dispersion paste (P-1) obtained in Production Example 4, 54 parts of the effect pigment dispersion (P-2) obtained in Production Example 5, 44.4 parts (solids content: 20 parts) of the aqueous acrylic resin dispersion (R-1) obtained in Production Example 1, 60 parts (solids content: 21 parts) of UCOAT UX-8100 (trade name, a urethane emulsion, produced by Sanyo Chemical Industries, Ltd., solids content: 35%), and 37.5 parts (solids content: 30 parts) of Cymel 325 (trade name, a melamine resin, produced by Nihon Cytec Industries Inc., solids content: 80%) were homogeneously mixed. Subsequently, UH-752 (trade name, produced by ADEKA Corporation, a thickening agent), 2-(dimethylamino)ethanol, and deionized water were added to the obtained mixture to obtain a base paint (X-1) with a pH of 8.0, a paint solids content of 25%, and a viscosity of 3000 mPa·s as measured with a Brookfield viscometer at 20°C at a rotational speed of 6 rpm.

Production Example 7

62.5 parts of the pigment dispersion paste (P-1) obtained in Production Example 4, 54 parts of the effect pigment dispersion (P-2) obtained in Production Example 5, 44.4 parts (solids content: 20 parts) of the aqueous acrylic resin dispersion (R-1) obtained in Production Example 1, 60 parts (solids content: 21 parts) of UCOAT UX-8100 (trade name, a urethane emulsion, produced by Sanyo Chemical Industries, Ltd., solids content: 35%), and 37.5 parts (solids content: 30 parts) of Cymel 325 (trade name, a melamine resin, produced by Nihon Cytec Industries Inc., solids content: 80%) were homogeneously mixed. Subsequently, UH-752 (trade name, produced by ADEKA Corporation, a thickening agent), 2-(dimethylamino) ethanol, and deionized water were added to the obtained mixture, thereby obtaining a base paint (X-2) with a pH of 8.0, a paint solids content of 14%, and a viscosity of 3500 mPa·s as measured with a Brookfield viscometer at 20°C at a rotational speed of 6 rpm.

Production of Aqueous Acrylic Resin Dispersion (R-4)

Production Example 8

154 parts of deionized water and 0.52 parts of Aqualon KH-10 were placed in a reaction vessel equipped with a thermometer, a thermostat, a stirrer, a reflux condenser, and a dropping funnel, and stirred and mixed in a nitrogen airstream, followed by heating to 80°C. Subsequently, 1% of the entire amount of the following monomer emulsion (1) and 5.3 parts of a 6% ammonium persulfate aqueous solution were placed in the reaction vessel and maintained at 80°C for 15 minutes. The remaining monomer emulsion (1) was then added dropwise to the reaction vessel over a period of 3 hours while the reaction vessel was maintained at the same temperature. After completion of the dropwise addition, the mixture was aged for 1 hour. The monomer emulsion (2) described below was then added dropwise over a period of 1 hour, followed by aging for 1 hour. Then, while 40 parts of a 5% dimethylethanol amine aqueous solution was gradually added to the reaction vessel, the reaction product was cooled to 30°C and discharged while being filtered through a 100-mesh nylon cloth, thus obtaining an aqueous acrylic resin dispersion (R-4) having a solids concentration of 28%. The obtained hydroxy-containing acrylic resin (R-4) had a hydroxy value of 25 mg KOH/g and an acid value of 33 mg KOH/g.

Monomer Emulsion (1)

42 parts of deionized water, 0.72 parts of Aqualon KH-10, 2.1 parts of methylenebisacrylamide, 2.8 parts of styrene, 16.1 parts of methyl methacrylate, 28 parts of ethyl acrylate, and 21 parts of n-butyl acrylate were mixed with stirring to obtain a monomer emulsion (1).

Monomer Emulsion (2)

18 parts of deionized water, 0.31 parts of Aqualon KH-10, 0.03 parts of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate, and 9 parts of n-butyl acrylate were mixed with stirring to obtain a monomer emulsion (2).

Production of Acrylic Resin Solution (R-5)

Production Example 9

48 parts of ethylene glycol monobutyl ether was placed in a usual acrylic resin reaction vessel equipped with a stirrer, a thermometer, and a reflux condenser, and heated with stirring to maintain the reaction mixture at 110°C. A mixture of 10 parts of styrene, 40 parts of methyl methacrylate, 25 parts of n-butyl methacrylate, 10 parts of 2-hydroxyethyl methacrylate, 3 parts of methacrylic acid, 5 parts of N,N-dimethylaminoethyl methacrylate (solids content, dissolved in 10 parts of deionized water and incorporated), 10 parts of NF Bisomer PEM6E (produced by Dai-ichi Kogyo Seiyaku Co., Ltd., trade name, polyethylene glycol monomethacrylate, molecular weight: about 350), 4 parts of azobisisobutyronitrile, and 20 parts of isobutyl alcohol was added dropwise thereto over 3 hours. After completion of the dropwise addition, the mixture was aged at 110°C for 30 minutes. Subsequently, an additional catalyst mixture of 25 parts of ethylene glycol monobutyl ether and 0.5 parts of azobisisobutyronitrile was added dropwise over 1 hour. After aging at 110°C for 1 hour, the mixture was cooled, thereby obtaining an acrylic resin solution (R-5) with a solids content of 50%. The acrylic resin solution (R-5) had a hydroxy value of 43 mg KOH/g and a weight average molecular weight of about 20,000.

Production of Color Pigment Dispersion (P-3)

Production Example 10

10.2 parts (solids content: 5.1 parts) of the acrylic resin solution (R-5) obtained in Production Example 9, 3 parts of Raven 5000 Ultra III Beads (a carbon black pigment, trade name, produced by Columbian Carbon Co.), and 39.4 parts of deionized water were mixed and dispersed using a paint shaker for 2 hours to obtain a pigment dispersion paste (P-3) with a solids content of 15.4%.

Production of Carboxy-containing Cellulose Nanofiber (C21)

Production Example 11

5 g of softwood-derived bleached dissolving kraft pulp (DKP, produced by Buckeye) was added to 500 ml of an aqueous solution of 19.5 mg (0.025 mmol per gram of absolute dry cellulose) of TEMPO (produced by Sigma Aldrich) and 514 mg of sodium bromide (1.0 mmol per gram of absolute dry cellulose), and the mixture was stirred until the pulp was uniformly dispersed. After 8 ml of a 2M aqueous sodium hypochlorite solution was added to the reaction system, the mixture was adjusted to a pH of 10.3 with a 0.5N aqueous hydrochloric acid solution to initiate the oxidation reaction. While the pH in the system decreases during the reaction, 3.0N sodium hydroxide solution was added sequentially to adjust the pH to 10. After the reaction was allowed to proceed for 2 hours, the mixture was filtered through a glass filter and thoroughly washed with water to obtain carboxylated cellulose. The amount of carboxy groups in the resulting carboxylated cellulose was 0.94 mmol/g. Hydrogen peroxide was then added to a 5% (w/v) slurry of oxidized hydrogen at 2% (w/v) relative to the oxidized cellulose, and the pH was adjusted to 12 with 1M sodium hydroxide. The slurry was subjected to hydrolysis treatment at 80°C for 2 hours. This was adjusted to 4.0% (w/v) with water and treated 5 times with an ultra-highpressure homogenizer (20°C, 140 MPa) to obtain a carboxy-containing cellulose nanofiber dispersion (C21-1). The carboxy-containing cellulose nanofiber dispersion (C21-1) had a carboxy content of 0.94 mmolol/g, an average fiber diameter of 6.9 nm, an average fiber length of 235 nm, and an aspect ratio of 34.

Production of Sulfonic Acid Group-containing Cellulose Nanocrystal (C32)

Production Example 12

CelluForce NCC (trade name, produced by CelluForce, number average diameter: 2.3 to 4.5 nm, number average length: 44 to 108 nm, specific surface area: 400 m$^2$/g, sulfonic acid group-containing cellulose nanocrystal, solids concentration: 100%) was gradually added to deionized water stirred with a magnetic stirrer to achieve a solids content of 4%. Stirring was continued for 2 hours to obtain a sulfonic acid group-containing cellulose nanocrystal dispersion (C32-1).

Production of Effect Pigment Dispersion

Example 1

4830 parts of distilled water, 15 parts (solids content: 15 parts) of Dynol-604 (trade name, produced by Evonik Industries AG, an acetylene-diol-based surface-adjusting agent, solids content: 100%), 434.8 parts (solids content: 200 parts) of Alpaste EMR-B6360 (trade name, produced by Toyo Aluminium K.K., solids content: 46%, a non-leafing aluminum flake, average particle size D50: 10.3 μm, thickness: 0.19 μm, surface-treated with silica), 150 parts (solids content: 3 parts) of phosphate group-containing cellulose nanofiber dispersion (C11-1) (number average fiber diameter: 4 nm, amount of phosphate groups introduced: 1.00 mmol/g, solids content: 2.0%), 675 parts (27 parts of solids content) of the carboxy-containing cellulose nanofiber dispersion (C21-1) obtained in Production Example 11, 118.9 parts (solids content: 33.3 parts) of Primal ASE-60 (trade name, produced by The Dow Chemical Company, a polyacrylic acid-based rheology control agent, an aqueous dispersion with a solids content of 28%), 25 parts of (solids content: 10 parts) of Tinuvin 479-DW (N) (trade name, produced by BASF, an ultraviolet absorber, solids content: 40%), 13.2 parts (solids content: 6.6 parts) of Tinuvin 123-DW(N) (trade name, produced by BASF, light stabilizer, solids content: 50%), and 52.6 parts (solids content: 8.1 parts) of the color pigment dispersion (P-3) obtained in Production Example 10 were placed in a stirring vessel. The resulting mixture was stirred and mixed to obtain an effect pigment dispersion (Y-1). The resulting effect pigment dispersion (Y-1) had a solids content of 4.8% and a coating viscosity B6 value of 1100 mPa·s.

Examples 2 to 10 and Comparative Examples 1 to 6

Effect pigment dispersions (Y-2) to (Y-16) were obtained in the same manner as in Example 1, except that the compositions shown in Table 1 were used.

Table 1

| The numerical values in parentheses indicate solids content. | | | | | |
|---|---|---|---|---|---|
| Production Example Number | Example | | | | |
| | 1 | 2 | 3 | 4 | 5 |
| Effect pigment dispersion (Y) | Y-1 | Y-2 | Y-3 | Y-4 | Y-5 |

(continued)

| The numerical values in parentheses indicate solids content. | | | | | | | |
|---|---|---|---|---|---|---|---|
| Production Example Number | | | Example | | | | |
| | | | 1 | 2 | 3 | 4 | 5 |
| Composition | Distilled water | | 4830 | 4650 | 4830 | 4650 | 5060 |
| | Wetting agent (A) | Dynol-604 | 15 (15) | 15 (15) | 15 (15) | 15 (15) | 15 (15) |
| | Effect pigment (B) | Alpaste EMR-B6360 | 434.8 (200) | 434.8 (200) | 434.8 (200) | 434.8 (200) | |
| | | Xirallic T61-10 Micro Silver (*1) | | | | | 200 (200) |
| | Nanocellulose (C) | Phosphate group-containing nanocellulose nanofiber dispersion (C11-1) | 150 (3) | 500 (10) | 150 (3) | 500 (10) | 150 (3) |
| | | Carboxy-containing cellulose nanofiber dispersion (C21-1) | 675 (27) | 500 (20) | | | 675 (27) |
| | | Sulfononic acid group-containing cellulose nanofiber dispersion (C32-1) | | | 675 (27) | 500 (20) | |
| | Rheology control agent other than nanocellulose (C) | Primal ASE-60 | 118.9 (33.3) | 118.9 (33.3) | 118.9 (33.3) | 118.9 (33.3) | 118.9 (33.3) |
| | Aqueous resin dispersion | Aqueous acrylic resin dispersion (R-4) | | | | | |
| | Ultraviolet absorber | TINUVIN 479-DW (N) | 25 (10) | 25 (10) | 25 (10) | 25 (10) | 25 (10) |
| | Light stabilizer | TINUVIN 123-DW (N) | 13.2 (6.6) | 13.2 (6.6) | 13.2 (6.6) | 13.2 (6.6) | 13.2 (6.6) |
| | Color pigment dispersion | Color pigment dispersion (P-3) | 52.6 (8.1) | 52.6 (8.1) | 52.6 (8.1) | 52.6 (8.1) | 52.6 (8.1) |
| Properties | Solids content (%) | | 4.8 | 4.8 | 4.8 | 4.8 | 4.8 |
| | Paint viscosity B6 value (mPa • s) | | 1100 | 2400 | 1100 | 2400 | 1100 |

Table 1 (continued)

| The numerical values in parentheses indicate solids content. | | | | | |
|---|---|---|---|---|---|
| Production Example Number | Example | | | | |
| | 6 | 7 | 8 | 9 | 10 |
| Effect pigment dispersion (Y) | Y-6 | Y-7 | Y-8 | Y-9 | Y-10 |

(continued)

| The numerical values in parentheses indicate solids content. | | | | | | | |
|---|---|---|---|---|---|---|---|
| Production Example Number | | | Example | | | | |
| | | | 6 | 7 | 8 | 9 | 10 |
| Composition | Distilled water | | 5060 | 4650 | 4650 | 4800 | 4830 |
| | Wetting agent (A) | Dynol-604 | 15 (15) | 15 (15) | 15 (15) | 15 (15) | 15 (15) |
| | Effect pigment (B) | Alpaste EMR-B6360 | | 434.8 (200) | 434.8 (200) | 434.8 (200) | 434.8 (200) |
| | | Xirallic T61-10 Micro Silver (*1) | 200 (200) | | | | |
| | Nanocellulose (C) | Phosphate group-containing cellulose nanofiber dispersion (C11-1) | 150 (3) | 500 (10) | 500 (10) | 150 (3) | 150 (3) |
| | | Carboxy-containing cellulose nanofiber dispersion (C21-1) | | 500 (20) | | 675 (27) | 675 (27) |
| | | Sulfonic acid group-containing cellulose crystal dispersion (C32-1) | 675 (27) | | 500 (20) | | |
| | Rheology control agent other than nanocellulose (C) | Primal ASE-60 | 118.9 (33.3) | | | 118.9 (33.3) | 83.2 (23.3) |
| | Aqueous resin dispersion | Aqueous acrylic resin dispersion (R-4) | | 118.9 (33.3) | 118.9 (33.3) | 18.2 (5.1) | 35.7 (10) |
| | Ultraviolet absorber | TINUVIN 479-DW (N) | 25 (10) | 25 (10) | 25 (10) | 25 (10) | 25 (10) |
| | Light stabilizer | TINUVIN 123-DW (N) | 13.2 (6.6) | 13.2 (6.6) | 13.2 (6.6) | 13.2 (6.6) | 13.2 (6.6) |
| | Color pigment dispersion | Color pigment dispersion (P-3) | 52.6 (8.1) | 52.6 (8.1) | 52.6 (8.1) | | 52.6 (8.1) |
| Properties | Solids content (%) | | 4.8 | 4.8 | 4.8 | 4.8 | 4.8 |
| | Paint viscosity B6 value (mPa·s) | | 1100 | 2100 | 2100 | 1100 | 950 |

Table 1 (continued)

| The numerical values in parentheses indicate solids content. | | | | | | | | |
|---|---|---|---|---|---|---|---|---|
| Production Example Number | | | Comparative Example | | | | | |
| | | | 1 | 2 | 3 | 4 | 5 | 6 |
| | Effect pigment dispersion (Y) | | Y-11 | Y-12 | Y-13 | Y-14 | Y-15 | Y-16 |
| Composition | Distilled water | | 4970 | 5410 | 5640 | 4290 | 4970 | 5200 |
| | Wetting agent (A) | Dynol-604 | 15 (15) | 15 (15) | 15 (15) | 15 (15) | 15 (15) | 15 (15) |
| | Effect pigment (B) | Alpaste EMR-B6360 | 434.8 (200) | 434.8 (200) | | 434.8 (200) | 434.8 (200) | |
| | | Xirallic T61-10 Micro Silver (*1) | | | 200 (200) | | | 200 (200) |

(continued)

| The numerical values in parentheses indicate solids content. | | | | | | | | |
|---|---|---|---|---|---|---|---|---|
| Production Example Number | | | Comparative Example | | | | | |
| | | | 1 | 2 | 3 | 4 | 5 | 6 |
| Nanocellulose (C) | Phosphate group-containing cellulose nanofiber dispersion (C11-1) | | | 150 (3) | 150 (3) | 1350 (27) | | |
| | Carboxy-containing cellulose nanofiber dispersion (C21-1) | | 675 (27) | | | | | 675 (27) |
| | Sulfonic acid group-containing cellulose crystal dispersion (C32-1) | | | | | | 675 (27) | |
| Rheology control agent other than nanocellulose (C) | Primal ASE-60 | | 129.6 (36.3) | 215.4 (60.3) | 215.4 (60.3) | 129.6 (36.3) | 129.6 (36.3) | 129.6 (36.3) |
| Aqueous resin dispersion | Aqueous acrylic resin dispersion (R-4) | | | | | | | |
| Ultraviolet absorber | TINUVIN 479-DW (N) | | 25 (10) | 25 (10) | 25 (10) | 25 (10) | 25 (10) | 25 (10) |
| Light stabilizer | TINUVIN 123-DW (N) | | 13.2 (6.6) | 13.2 (6.6) | 13.2 (6.6) | 13.2 (6.6) | 13.2 (6.6) | 13.2 (6.6) |
| Color pigment dispersion | Color pigment dispersion (P-3) | | 52.6 (8.1) | 52.6 (8.1) | 52.6 (8.1) | 52.6 (8.1) | 52.6 (8.1) | 52.6 (8.1) |
| Properties | Solids content (%) | | 4.8 | 4.8 | 4.8 | 4.8 | 4.8 | 4.8 |
| | Paint viscosity B6 value (mPa·s) | | 500 | 1200 | 1200 | 5800 | 500 | 500 |
| *1: Xirallic T61-10 Micro Silver: trade name, produced by Merck & Co., Inc., solids content: 100%, a titanium oxide-coated alumina flake pigment, average primary particle size: about 11.8 μm | | | | | | | | |

Comparative Example 7

Commercially available WBC-713T No. 1F7 (trade name, produced by Kansai Paint Co., Ltd., an acrylic melamine resin-based aqueous base coating composition, coating color: silver, solids content: 23%, containing an aluminum pigment, not using nanocellulose (C)) was used as an effect pigment dispersion (Y-17).

Preparation of Clear Paint (Z)

Clear Paint (Z-1)

KINO6510 (trade name, produced by Kansai Paint Co., Ltd., a hydroxy/isocyanate-curable, acrylic resin/urethane resin-based two-component organic solvent-based paint) was used as a clear paint (Z-1).

Preparation of Test Plates

(1) Preparation of Test Plates for Evaluating Wrinkles, 60° specular gloss (60° gloss), and flip-flop properties

Example 11

The substrate prepared above in [1] were used as substrates. The base paint (X-1) was electrostatically applied to each substrate in an upright state using a rotary atomization bell coater to achieve a film thickness of 9 $\mu$m in terms of cured coating film thickness. The coated substrate was allowed to stand for 2 minutes to form an uncured base coating film.

Subsequently, the effect pigment dispersion (Y-1) prepared in Example 1 was applied to the uncured base coating film in an upright state using a robot bell (produced by ABB) at a booth temperature of 23°C and a humidity of 68% to achieve a film thickness of 0.7 $\mu$m in terms of dry coating film thickness. The coated substrate was allowed to stand for 3 minutes and then preheated in an uptight state at 80°C for 3 minutes to form an effect coating film.

Subsequently, the clear paint (Z-1) was applied to the uncured effect coating film in an upright state using a robot bell (produced by ABB) at a booth temperature of 23°C and a humidity of 68% to achieve a film thickness of 35 $\mu$m in terms of dry coating film thickness. After coating, the film was allowed to stand at room temperature for 7 minutes and then heated in an upright state using a hot-air-circulation drying oven at 140°C for 30 minutes to simultaneously dry the coating layers of the multilayer coating film, thus preparing a test plate for evaluating wrinkles, 60° specular gloss (60° gloss), and flip-flop properties.

The dry coating film thickness of the effect coating film was calculated according to the following formula. The same applies to those in the following Examples.

$$x = sc/sg/S*10000$$

x: film thickness [$\mu$m]
sc: solids content of applied coating (g)
sg: specific gravity of coating film (g/cm$^3$)
S: evaluation area of coating solids content (cm$^2$)

Examples 12 to 21 and Comparative Examples 8 to 14

Test plates for evaluating wrinkles, 60° specular gloss (60° gloss), and flip-flop properties were obtained in the same manner as in Example 11, except that the paint, effect pigment dispersion, and film thickness were changed to those shown in Table 2.

(2) Preparation of Test Plates for Evaluating Sagging in Vertical Portions

Example 11

A series of 17 punch holes, each with a diameter of 5 mm, was made in a single row at 2-cm intervals between adjacent holes, the first punch hole starting at a portion 3 cm from an end of the long side of the substrate prepared above in [1]. Each punch hole was formed 10 cm away from the side with a length of 400 mm.

Subsequently, the test substrate was disposed so that its 400-mm side extended horizontally and its 300-mm side extended vertically. The base coat (X-1) was then electrostatically applied to the test substrate in an upright state by using a rotary atomization bell coating machine to achieve a film thickness of 9 $\mu$m in terms of cured coating film thickness, and allowed to stand for 2 minutes to form an uncured base coat film.

Subsequently, the effect pigment dispersion (Y-1) was applied to the uncured base coating film in an upright state using a robot bell (produced by ABB) at a booth temperature of 22°C and a humidity of 78% to form a coating with a gradient thickness of from about 0.5 $\mu$m to 4 $\mu$m in the longitudinal direction, in terms of dry-coating film thickness, and allowed to stand for 3 minutes and then pre-heated in an upright state at 80°C for 3 minutes to form an effect coating film.

Subsequently, the effect pigment dispersion (Z-1) was applied to the uncured base coating film in an upright state using a robot bell (produced by ABB) at a booth temperature of 23°C and a humidity of 68% to achieve a film thickness of 35 $\mu$m in terms of dry coating film thickness, thus forming a clear coating film. After coating, the film was allowed to stand at room temperature for 7 minutes, and then heated in an upright state using a hot-air-circulation drying oven at 140°C for 30 minutes to simultaneously dry the coating layers of the multilayer coating film, thus preparing a test plate for evaluating sagging in vertical portions.

Examples 12 to 21 and Comparative Examples 8 to 14

Test plates for evaluating sagging in vertical portions were obtained in the same manner as in Example 11, except that the paint, effect pigment dispersion, and film thickness were changed as shown in Table 2.

Table 2

| | Example | | | | | | | | | | |
|---|---|---|---|---|---|---|---|---|---|---|---|
| | 11 | 12 | 13 | 14 | 15 | 16 | 17 | 18 | 19 | 20 | 21 |
| Base paint (X) | X-1 | X-1 | X-1 | X-1 | X-1 | X-1 | X-1 | X-1 | X-1 | X-1 | X-2 |
| Effect pigment dispersion (Y) | Y-1 | Y-2 | Y-3 | Y-4 | Y-5 | Y-6 | Y-7 | Y-8 | Y-9 | Y-10 | Y-2 |
| Film thickness of effect coating film ($\mu$m) | 0.7 | 0.7 | 0.7 | 0.7 | 0.7 | 0.7 | 0.7 | 0.7 | 0.7 | 0.7 | 0.7 |
| Clear paint (Z) | Z-1 | Z-1 | Z-1 | Z-1 | Z-1 | Z-1 | Z-1 | Z-1 | Z-1 | Z-1 | Z-1 |
| Wrinkles | A | B | A | B | A | A | B | B | A | A | A |
| 60° specular gloss (60° gloss) | 128 | 129 | 126 | 128 | 101 | 100 | 129 | 127 | 128 | 128 | 128 |
| L*value at a light-receiving angle of 15° (L*15 value) | 161 | 161 | 160 | 161 | 109 | 107 | 161 | 160 | 160 | 160 | 160 |
| L*value at a light-receiving angle of 75° (L*75 value) | 19 | 19 | 19 | 19 | 36 | 36 | 19 | 19 | 19 | 19 | 19 |
| FF value | 8.5 | 8.5 | 8.4 | 8.5 | 3.0 | 3.0 | 8.5 | 8.4 | 8.4 | 8.4 | 8.4 |
| Sag limit film thickness ($\mu$m) | 4 | 4 | 4 | 4 | 4 | 4 | 4 | 4 | 4 | 4 | 4 |

Table 2 (continued)

| | Comparative Example | | | | | | |
|---|---|---|---|---|---|---|---|
| | 8 | 9 | 10 | 11 | 12 | 13 | 14 |
| Base paint (X) | X-1 | X-1 | X-1 | X-1 | X-1 | X-1 | X-1 |
| Effect pigment dispersion (Y) | Y-11 | Y-12 | Y-13 | Y-14 | Y-15 | Y-16 | Y-17 |
| Film thickness of effect coating film ($\mu$m) | 0.7 | 0.7 | 0.7 | 0.7 | 0.7 | 0.7 | 15 |
| Clear paint (Z) | Z-1 | Z-1 | Z-1 | Z-1 | Z-1 | Z-1 | Z-1 |
| Wrinkles | A | A | A | C | A | A | A |
| 60° specular gloss (60° gloss) | 126 | 120 | 93 | 130 | 125 | 101 | 104 |
| L*value at a light-receiving angle of 15° (L*15 value) | 160 | 157 | 106 | 161 | 160 | 108 | 135 |
| L*value at a light-receiving angle of 75° (L*75 value) | 19 | 21 | 39 | 19 | 19 | 36 | 37 |
| FF value | 8.4 | 7.5 | 2.7 | 8.5 | 8.4 | 3.0 | 3.6 |
| Sag limit film thickness ($\mu$m) | 1 | 4 | 4 | 4 | 1 | 1 | - |

Coating Film Evaluation

Each test plate obtained in the manner described above was evaluated for the following evaluation items. Table 2 shows the results.

Wrinkles

The edge portions of the test plates were visually observed and evaluated according to the following criteria. Coating films evaluated as A and B are acceptable.

A: No wrinkles are observed, and the coating film has an extremely excellent appearance.

B: Almost no wrinkles are observed, and the coating film has an excellent appearance.

C: Considerable or significant wrinkles are observed, and the coating film has poor appearance.

60° mirror gloss (60° gloss)

The 60° gloss value was measured with a gloss meter (micro-TRI-gloss, produced by BYK-Gardner). The higher the value, the better. In the Examples and Comparative Examples using aluminum pigments, coating films with a gloss value of 122 or higher were assessed as acceptable, while in the Examples and Comparative Examples using interference pigments, coating films with a gloss value of 97 or higher are acceptable.

Flip-flopping Properties

The L*value at a light-receiving angle of 15° (L*15 value) and the L*value at a light-receiving angle of 75° (L*75 value) were measured with a multi-angle colorimeter (trade name: BYK-mac i; produced by BYK). The FF value of each coating film was calculated according to the following formula and evaluated. In the Examples and Comparative Example using an aluminum pigment, coating films with a FF value of 8.0 or more are acceptable, whereas in the Examples and Comparative Examples using a light interference pigment, coating films with a FF value of 2.8 or more are acceptable.

$$FF\ value = L*15\ value\ /\ L*75\ value$$

Sagging in Vertical Portions

In each test plate, the position at which coating film sagging of 3 mm from the lower end of the punch hole occurred was investigated, and the film thickness at that position (sag limit film thickness (μm)) was measured to evaluate sagging in vertical portions. The greater the sag limit film thickness, the better the sag resistance. Coating films with a sag limit film thickness of 4 μm or more were assessed as acceptable.

In Table 2, the hyphen in the sag limit film thickness in Comparative Example 14 indicates that no sagging occurred when a coating composition comprising the effect pigment dispersion (Y-1) was applied to a dry film thickness of 4 μm.

The embodiments and Examples of the present invention are specifically described above. However, the present invention is not limited to these embodiments, and various modifications can be made based on the technical idea of the present invention.

**Claims**

1.   An effect pigment dispersion comprising

a wetting agent (A),
an effect pigment (B),
nanocellulose (C), and
water (D),

wherein

the effect pigment dispersion has a solids content of 0.1 to 10 parts by mass per 100 parts by mass of all of the components of the effect pigment dispersion, and
the nanocellulose (C) comprises phosphate group-containing nanocellulose (C1) and at least one member selected from the group consisting of carboxy-containing nanocellulose (C2) and sulfonic acid group-containing nanocellulose (C3).

2.   The effect pigment dispersion according to claim 1, wherein the effect pigment (B) comprises an aluminum pigment.

3.   The effect pigment dispersion according to claim 1 or 2, wherein the phosphate group-containing nanocellulose (C1) comprises phosphate group-containing cellulose nanofiber (C11) and/or phosphate group-containing cellulose nanocrystal (C12).

4.   The effect pigment dispersion according to any one of claims 1 to 3, wherein the cellulose (C) comprises the carboxy-containing nanocellulose (C2), the carboxy-containing nanocellulose (C2) comprising carboxy-containing cellulose nanofiber (C21) and/or carboxy-containing cellulose nanocrystal (C22).

5. The effect pigment dispersion according to any one of claims 1 to 4, wherein the cellulose (C) comprises the sulfonic acid group-containing nanocellulose (C3), the sulfonic acid group-containing nanocellulose (C3) comprising sulfononic acid group-containing cellulose nanofiber (C31), and/or sulfonic acid group-containing cellulose nanocrystal (C32).

6. The effect pigment dispersion according to any one of claims 1 to 5, wherein the content ratio of the phosphate group-containing nanocellulose (C1) to the at least one member selected from the group consisting of carboxy-containing nanocellulose (C2) and sulfonic acid group-containing nanocellulose (C3) is in the range of 1/99 to 50/50 in terms of mass ratio.

7. A method for forming a multilayer coating film, comprising the following steps:

   step (1): applying a base paint (X) to a substrate to form an uncured base coating film;
   step (2): applying the effect pigment dispersion (Y) of any one of claims 1 to 6 to the base coating film formed in step (1) to form an uncured effect coating film;
   step (3): applying a clear paint (Z) to the effect coating film formed in step (2) to form an uncured clear coating film; and
   step (4): simultaneously heating the uncured base coating film formed in step (1), the uncured effect coating film formed in step (2), and the uncured clear coating film formed in step (3) to cure the films.

## INTERNATIONAL SEARCH REPORT

| International application No. |
| --- |
| **PCT/JP2024/012976** |

### A. CLASSIFICATION OF SUBJECT MATTER

*C09D 17/00*(2006.01)i; *B05D 1/36*(2006.01)i; *B05D 5/06*(2006.01)i; *B05D 7/24*(2006.01)i; *C09C 1/40*(2006.01)i; *C09C 3/10*(2006.01)i; *C09D 7/62*(2018.01)i; *C09D 201/00*(2006.01)i

FI: C09D17/00; B05D1/36 B; B05D5/06 101A; B05D5/06 101Z; B05D7/24 302C; B05D7/24 303A; B05D7/24 303C; B05D7/24 303G; C09C1/40; C09C3/10; C09D7/62; C09D201/00

According to International Patent Classification (IPC) or to both national classification and IPC

### B. FIELDS SEARCHED

Minimum documentation searched (classification system followed by classification symbols)

C09D17/00; B05D1/36; B05D5/06; B05D7/24; C09C1/40; C09C3/10; C09D7/62; C09D201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2019/225629 A1 (KANSAI PAINT CO., LTD.) 28 November 2019 (2019-11-28) claims 1, 8, paragraphs [0056]-[0073], examples 1-57 | 1-7 |
| A | WO 2022/014137 A1 (KANSAI PAINT CO., LTD.) 20 January 2022 (2022-01-20) claims 1, 8, paragraphs [0058]-[0073], examples 1-18 | 1-7 |
| A | WO 2021/002196 A1 (KANSAI PAINT CO., LTD.) 07 January 2021 (2021-01-07) claims 1, 4-5, 7, paragraphs [0030]-[0070], examples 1-57 | 1-7 |
| A | JP 2023-16083 A (NIPPON FINE CHEMICAL CO.) 02 February 2023 (2023-02-02) claims 1, 4, paragraphs [0007]-[0011], [0016], examples 5, 9, 12, 16, 21, 34, 45, 50 | 1-7 |
| A | JP 2023-16084 A (NIPPON FINE CHEMICAL CO.) 02 February 2023 (2023-02-02) claims 1, 5, paragraphs [0006]-[0011], example 26 | 1-7 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012976**

| Patent document cited in search report | | | Publication date (day/month/year) | Patent family member(s) | | | Publication date (day/month/year) |
|---|---|---|---|---|---|---|---|
| WO | 2019/225629 | A1 | 28 November 2019 | US | 2021/0214571 | A1 | |
| | | | | claims 1, 8, paragraphs [0077]-[0094], examples 1-57 | | | |
| | | | | CN | 112236491 | A | |
| | | | | CA | 3101090 | A1 | |
| WO | 2022/014137 | A1 | 20 January 2022 | US | 2023/0303856 | A1 | |
| | | | | claims 1, 8, paragraphs [0065]-[0080], examples 1-18 | | | |
| | | | | EP | 4183489 | A1 | |
| | | | | TW | 202204537 | A | |
| | | | | CN | 115702220 | A | |
| | | | | CA | 3181674 | A1 | |
| WO | 2021/002196 | A1 | 07 January 2021 | US | 2022/0348773 | A1 | |
| | | | | claims 8, 11, 14, 20, paragraphs [0031]-[0071], examples | | | |
| | | | | EP | 3995545 | A1 | |
| | | | | CN | 114072472 | A | |
| | | | | CA | 3145553 | A1 | |
| | | | | TW | 202106817 | A | |
| JP | 2023-16083 | A | 02 February 2023 | (Family: none) | | | |
| JP | 2023-16084 | A | 02 February 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63272544 A
- JP 2009155537 A

- WO 2017175468 A